# EUROPÄISCHE PATENTSCHRIFT

(11) **EP 3 573 195 B1**
(45) Veröffentlichungstag und Bekanntmachung des Hinweises auf die Patenterteilung: **04.11.2020**
(21) Anmeldenummer: 19185368.8
(22) Anmeldetag: 02.02.2017
(51) Int. Cl.: H01R 13/66, H01R 13/717, H01R 13/639, B60L 53/16, B60L 53/18, B60L 53/30, H01R 13/453

(54) **STECKDOSE**
SOCKET
PRISE DE COURANT

(30) Priorität: 02.02.2016 DE 102016101760; 22.03.2016 DE 102016105270
(43) Veröffentlichungstag der Anmeldung: 27.11.2019
(62) Teilanmeldung aus: 17154474.5
(73) Patentinhaber: ConWys AG, 6023 Rothenburg (CH)
(72) Erfinder: Wystron, Alexander, 6005 Luzern (CH)
(74) Vertreter: Rausch Wanischeck-Bergmann Brinkmann

(56) Entgegenhaltungen:
- EP-A2- 2 492 134
- DE-A1-102009 034 428
- DE-A1-102011 000 094
- DE-A1-102012 021 518
- DE-B3-102012 022 413
- US-A1- 2011 043 355
- US-B2- 8 794 689
- Gps ET AL: "Standard Features", , 30. Dezember 2010 (2010-12-30), XP055377392, Gefunden im Internet: URL:https://www.enaikoon.com/fileadmin/ena ikoon/Dateien/pdf/Datenblatt/locate-60/eng lisch/ENAiKOON_locate-60_61_data_sheet.pdf [gefunden am 2017-05-31]

## Beschreibung

Die Erfindung betrifft eine Steckdose zur Stromaufnahme mittels eines Steckers, mit einem Dosengehäuse und einer davon aufgenommenen Kontakteinrichtung, die eine Mehrzahl von im endmontierten Zustand jeweils mit einer Kontaktbuchse bestückten Aufnahmen aufweist, wobei das Dosengehäuse eine mittels eines verschwenkbar ausgebildeten Deckels verschließbare Steckeröffnung für einen Zugriff auf die Kontakteinrichtung aufweist, und mit einem vom Dosengehäuse beherbergten und über einen elektromotorischen Antrieb verfügenden Aktuator, der im Stromentnahmefall einer elektromotorischen Verfahrbewegung eines Riegelelements zur Positionssicherung eines die Kontakteinrichtung kontaktierenden Steckers dient, wobei eine mit dem Aktuator zusammenwirkende Steuereinheit vorgesehen ist, die eine Beendigung einer Stromentnahme detektiert, wobei das vom Aktuator betätigbare Riegelelement nur dann in eine Offenstellung überführbar ist, wenn die Steckdose stromlos gestellt ist.

Steckdosen der eingangs genannten Art sind aus dem Stand der Technik an sich gut bekannt, weshalb es eines gesonderten druckschriftlichen Nachweises an dieser Stelle nicht bedarf. Es sei deshalb auch nur beispielhaft auf die EP 2 492 134 A2 verwiesen.

Eine gattungsgemäße Steckdose wirkt im bestimmungsgemäßen Verwendungsfall mit einem Stecker zusammen. Dabei erfolgt im Stromentnahmefall typischerweise eine Stromübertragung von der Steckdose auf den in die Steckdose eingeführten Stecker. Eine Stromentnahme kann aber auch in anderer Wirkrichtung stattfinden, das heißt vom Stecker auf die Steckdose.

Gattungsgemäße Steckdosen verfügen typischerweise über ein Dosengehäuse. Dieses nimmt die eigentliche Kontakteinrichtung auf, die im bestimmungsgemäßen Verwendungsfall mit dem Stecker in Wirkkontakt steht. Die Kontakteinrichtung verfügt zu diesem Zweck über eine Mehrzahl von Kontaktbuchsen, wobei die Kontakteinrichtung je Kontaktbuchse eine Aufnahme aufweist, in die die Kontaktbuchse im endmontierten Zustand positionssicher gehalten ist. Jede Kontaktbuchse ist endseitig eines Anschlusskabels angeordnet.

Das Dosengehäuse stellt eine Steckeröffnung zur Verfügung, durch die hindurch der Stecker zwecks Kontaktierung der Kontakteinrichtung zu führen ist. Diese Steckeröffnung ist mittels eines verschwenkbar ausgebildeten Deckels verschließbar. Ein Steckerzugriff durch die Steckeröffnung hindurch auf die Kontakteinrichtung ist also nur dann möglich, wenn sich der Deckel nicht in Verschluss-, sondern Offenstellung befindet.

Eine gattungsgemäße Steckdose ist aus der schon eingangs genannten EP 2 492 134 A2 bekannt geworden. Das Dosengehäuse dieser Steckdose beherbergt einen Aktuator, der mit einem Riegelelement zusammenwirkt, das zwei Riegelfortsätze aufweist. Dabei befinden sich die beiden Riegelfortsätze wechselweise entweder in Riegelstellung oder in Freigabestellung, so dass sich der eine Riegelfortsatz in Riegelstellung befindet, wenn sich der andere Riegelfortsatz in Freigabestellung befindet und umgekehrt. Dabei wirken der eine Riegelfortsatz mit einem Deckel der Steckdose und der andere Riegelfortsatz mit einem in die Steckdose eingeführten Stecker zusammen.

Aus der DE 10 2011 108 117 A1 ist eine als Ladesteckdose für Elektrofahrzeuge ausgebildete Steckdose bekannt geworden. Die Ladesteckdose ist als Teil einer Ladeeinrichtung ausgebildet, die ferner über mehrere Antriebe oder Aktuatoren verfügt, die unter anderem dem Verriegeln einer mechanischen Verbindung der Ladeeinrichtung mit einer korrespondierenden Ladeeinrichtung einer Ladestation dienen könne.

Aus der DE 10 2009 058 864 A1 ist ferner ein Verfahren zum Ansteuern eines Kraftfahrzeugverschlusses sowie eine Verschlusseinrichtung für Kraftfahrzeuge bekannt geworden. Die Verschlusseinrichtung verfügt über ein Verschlussteil, mit dem die Mündung eines Kraftstoffeinfüllstutzens verschließbar ist. Dieses Verschlussteil ist mittels einer Antriebseinrichtung zwischen einer Verschlussstellung und einer Öffnungsstellung bewegbar. Des Weiteren verfügt die Verschlusseinrichtung über eine Sensoreinrichtung, die einen in der Nachbarschaft des Verschlussteils angeordneten Näherungssensor aufweist und im Übrigen derart ausgebildet ist, dass ein Öffnungssignal an die Antriebseinrichtung zum Öffnen des Verschlussteils abgegeben werden kann, wenn eine sich annähernde Person und/oder ein sich annähernder Gegenstand einen vorbestimmten Abstand zum Näherungssensor unterschreitet.

Aus der DE 10 2012 021 518 A1 ist ein Verfahren zur Unterstützung eines Betankungs-/Aufladevorgangs eines Energiespeichers eines Fahrzeuges bekannt geworden. Dieses vorbekannte Verfahren sieht vor, dass ein automatisches Erkennen einer Energieabgabevorrichtung im Bereich einer Zufuhröffnung des Energiespeichers des Fahrzeuges erfolgt, wobei im Ansprechen auf das Erkennen ein Verschlusselement der Zufuhröffnung automatisch öffnet, so dass die Stellung des Verschlusselements ein Verbinden der Energieabgabevorrichtung ermöglicht. Die automatische Erkennung der Energieabgabevorrichtung erfolgt mittels einer optischen Erfassungseinheit, entweder in Alleinstellung oder in Kombination mit weiteren Erfassungseinheiten, beispielsweise solchen, die auf Basis von Funkerkennungsmerkmalen arbeiten.

Es ist des Weiteren aus der DE 10 2011 000 094 A1 ein System zur Zugriffskontrolle auf eine Ladesteckdose an einem Kraftfahrzeug bekannt geworden, wobei die Ladesteckdose eine verriegelbare Abdeckung aufweist. Systemseitig ist im Bereich der Ladesteckdose ein Annäherungssensor angeordnet, welcher die Annäherung eines Körpers erfasst. Der Annäherungssensor ist mit einem fahrzeugseitigen Steuersystem gekoppelt, welches seinerseits mit wenigstens einer Sendespule für elektromagnetische Wecksignale gekoppelt ist. Das System verfügt ferner über einen zum Fahrzeug separaten ID-Geber, der zum Empfang der Wecksignale ausgebildet ist. Der ID-Geber und das Steuersystem weisen jeweils Mittel zum Ausführen einer bidirektionalen Funkkommunikation zur Authentifizierung des ID-Gebers auf. Dabei erfolgt eine Entriegelung der Abdeckung der Ladesteckdose durch das Steuersystem in Reaktion auf eine erfolgreiche Authentifizierung.

Aus der WO 2014/005623 A1 ist ein Verfahren zum Entriegeln eines Steckers bekannt, wobei der Stecker als Teil einer Ladeeinrichtung zum Laden einer Fahrbatterie eines elektrisch antreibbaren Fahrzeugs ausgebildet ist. Das vorbekannte Verfahren sieht vor, dass ein Stecker in einer Steckdose der Ladeeinrichtung verriegelt wird, dass die Ladeeinrichtung auf das Auftreten von Störungen hin überwacht wird und dass bei Auftreten einer Störung der Stecker entriegelt wird, um ein Trennen des Steckers von der Steckdose ermöglichen zu können.

Aus der DE 10 2014 015 576 A1 ist ferner eine Ladeeinrichtung zum Aufladen eines Kraftwagens bekannt, die über wenigstens ein Anschlusselement verfügt, mit welchem ein korrespondierender Stecker eines Ladekabels zum Aufladen der Batterie verbindbar ist. Es ist des Weiteren wenigstens ein Verriegelungselement vorgesehen, welches zwischen wenigstens einer den Stecker am Anschlusselement arretierenden Verriegelungsstellung und wenigstens einer den Stecker freigebenden Lösestellung verstellbar ist.

Die DE 10 2010 045 131 A1 offenbart eine Steckerverbindung für ein Elektrofahrzeug, der über zumindest einen Kontakt zur Energieübertragung verfügt, welcher zusätzliche Mittel zur seriellen Datenübertragung aufweist.

Die DE 10 2012 214 754 A1 offenbart ein Fahrzeug-Inlet zum Einsatz beim Laden einer Batterie eines Elektrofahrzeugs oder eines Hybrid-Elektrofahrzeugs. Dabei enthält das Fahrzeug-Inlet ein Gehäuse, eine Leuchteinheit mit wenigstens einer Leuchtdiode und ein Leuchtelement, das zur Anbringung an dem Gehäuse und zum Zusammenwirken mit der Leuchteinheit eingerichtet ist. Darüber hinaus ist vorgesehen, dass das Leuchtelement so eingerichtet ist, dass es durch die wenigstens eine Leuchtdiode der Leuchteinheit basierend darauf beleuchtet wird.

Die DE 10 2012 101 094 A1 offenbart schließlich noch einen Steckverbinder, insbesondere eine Steckdose, zum Herstellen einer elektrischen Steckverbindung mit einem Gegensteckverbinder für ein elektrisches Anschließen eines einen Elektro- oder Hybridantrieb aufweisenden Fahrzeugs an eine Ladeeinrichtung. Der Steckverbinder verfügt über ein Gehäuse sowie über ein aus dem Gehäuse ausfahrbaren und in das Gehäuse einfahrbaren Sicherungselement zum Sichern einer Verriegelung von Steckverbinder und Gegensteckverbinder.

Es ist die **Aufgabe** der Erfindung, eine Steckdose der gattungsgemäßen Art dahingehend weiterzuentwickeln, dass sie insbesondere unter dem Gesichtspunkt der Betriebssicherheit für die Verwendung im Anwendungsbereich der Elektromobilität ausgerüstet ist.

Zur Lösung dieser Aufgabe wird mit der Erfindung eine Steckdose mit den Merkmalen des Hauptanspruchs vorgeschlagen. Vorteilhafte Ausgestaltungen finden sich in den abhängigen Ansprüchen.

Das Dosengehäuse der Steckdose beherbergt einen ersten und einen zweiten Aktuator. Der erste Aktuator dient im Betriebsfall dazu, eine elektromotorische Verschwenkbewegung des Deckels zu bewirken. Der die Steckeröffnung des Dosengehäuses verschließende Deckel kann mithin elektromotorisch aus einer Verschlussstellung in eine Offenstellung bzw. aus einer Offenstellung in eine Verschlussstellung überführt werden. Der zweite Aktuator dient indes dazu, im Stromentnahmefall einen die Kontakteinrichtung kontaktierenden Stecker in seiner Position zu sichern. Zu diesem Zweck wirkt der zweite Aktuator mit einem Riegelelement zusammen, das mittels des zweiten Aktuators elektromotorisch verfahren werden kann.

Die Steckdose verfügt über eine Steuereinheit, die mit einem Steckersensor einen bestimmungsgemäß mit der Kontakteinrichtung gekoppelten Stecker detektiert und ein entsprechendes Freigabesignal zur Bestromung der Kontakteinheit abgibt.

Die Steckdose verfügt über einen Steckersensor, der bevorzugterweise von der Steuereinheit bereitgestellt ist. Der Steckersensor dient dazu, eine ordnungsgemäße Kontaktierung der Kontakteinrichtung zu detektieren, das heißt den ordnungsgemäßen Sitz eines in die Steckdose eingeführten Steckers zu erfassen. Sobald der ordnungsgemäße Sitz eines in die Steckdose eingeführten Steckers erkannt ist, erfolgt eine steuereinheitenseitige Freigabe, infolge dessen eine Bestromung der Kontakteinheit stattfindet. Ist der Stecker indes nicht ordnungsgemäß in die Steckdose eingeführt, unterbleibt ein entsprechendes Freigabesignal mit der Folge, dass eine Bestromung der Kontakteinheit nicht durchgeführt wird.

Die Steuereinheit wirkt mit dem zweiten Aktuator zusammen und gibt im Stromentnahmefall ein Steuersignal an den zweiten Aktuator zwecks Betätigung des Riegelelements ab. Eine Positionssicherung des Steckers durch Verfahren des Riegelelements findet also dann statt, wenn eine Bestromung der Kontakteinheit stattfindet, mithin die Stromentnahme startet. Die Detektion der ordnungsgemäßen Anordnung des Steckers innerhalb der Steckdose bewirkt mithin zweierlei. Zum einen wird die Freigabe zur Bestromung der Kontakteinheit gegeben und zum anderen wird mittels des zweiten Aktuators das Riegelelement betätigt, um so eine Verriegelung des Steckers zu bewirken. Sollte das Riegelelement beispielsweise durch eine ungewollte Blockade nicht in seine Riegelstellung verbracht werden können, eine Lagesicherung des Steckers also nicht stattfinden, so unterbleibt in vorteilhafter Weise aus Sicherheitsgründen eine Bestromung der Kontakteinheit.

Sobald eine Stromentnahme endet, kann der Stecker verwenderseitig nur nach einer vorherigen Entriegelung aus der Steckdose herausgezogen werden. Dabei setzt eine Entriegelung des Steckers voraus, dass die Steckdose zuvor spannungslos gestellt ist. Es ist mithin die Bestromung der Steckdose zu beenden, bevor ein Überführen des Riegelelements in seine Freigabestellung zwecks Entfernung des Steckers aus der Steckdose erfolgen kann.

Die Beendigung der Stromentnahme wird bevorzugterweise mittels der Steuereinheit detektiert. Verwenderseitig können diesbezüglich mehrere Optionen gegeben sein. So kann beispielsweise vorgesehen sein, dass nach Ablauf einer verwenderseitig vorgegebenen Ladedauer eine Bestromung der Steckdose automatisch endet. Dies wird dem Verwender angezeigt, so dass dieser der Steckdose den Stecker entnehmen kann.

Ein Ladevorgang kann bevorzugterweise auch verwenderseitig abgebrochen werden. Die Steuereinheit verfügt zu diesem Zweck über entsprechende Kommunikationsschnittstellen, die es dem Verwender ermöglichen, einen Ladevorgang durch entsprechende Signalvermittlung manuell abzubrechen. Das Bestromungsende und die daraufhin erfolgte Freigabe des Steckers wird dem Verwender bevorzugterweise angezeigt, beispielsweise akustisch und/oder visuell, so dass daraufhin eine Steckerentnahme stattfinden kann.

Gemäß einer weiteren Option kann vorgesehen sein, dass der Ladevorgang auch dahingehend überwacht wird, dass der Ladezustand des aufzuladenden Energiespeichers erfasst wird. Sobald detektiert wird, dass der aufzuladende Ladespeicher aufgeladen ist, erfolgt eine automatische Beendigung des Ladevorgangs. In schon vorbeschriebener Weise kann dem Verwender dies angezeigt werden.

Zum Abbruch eines Ladevorgangs kann gemäß einem weiteren Merkmal der Erfindung ein zweiter Näherungssensor vorgesehen sein, so dass es in vorteilhafter Weise gestattet ist, einen zuvor eingeleiteten Ladevorgang berührungslos abzubrechen. Zu diesem Zweck ist gemäß einem weiteren Merkmal der Erfindung vorgesehen, dass die Steuereinheit mittels eines zweiten Näherungssensors eine und/oder einen sich dem Näherungssensor nähernde Person und/oder nähenden Gegenstand detektiert und im Stromentnahmefall bei Unterschreitung eines vorgebbaren Näherungsabstandes ein Steuersignal zur Unterbrechung der Stromentnahme abgibt. Dabei setzt eine Unterbrechung der Stromentnahme eine vorherige verwenderseitige Aktivierung des zweiten Näherungssensors voraus. Optional kann auch ein automatisches Schließen des Deckels vorgesehen sein, was voraussetzt, dass ein zuvor in die Steckdose ordnungsgemäß eingeführter Stecker aus dieser wieder entfernt ist. Hierzu dient ein von der Steckdose bereitgestellter Steckersensor, der eine Freischaltung des zweiten Näherungssensors bewerkstelligt, sobald der Stecker aus der Steckdose gezogen ist. Sobald dann der Näherungssensor einen nicht mehr im Nahbereich der Steckdose befindlichen Stecker und/oder eine Person detektiert, erfolgt eine vollautomatische Schließung des Deckels.

Ein mittels des ersten Aktuators mögliches Verschwenken des Deckels dient insbesondere einer verwenderseitigen Handhabungsverbesserung, da eine manuelle Betätigung des Deckels nicht erforderlich ist. Die mittels des zweiten Aktuators bewirkte Positionssicherung eines die Kontakteinrichtung kontaktierenden Steckers erbringt eine erhöhte Betriebssicherheit, da ein unbeabsichtigtes Lösen von Steckdose und Stecker im Stromentnahmefall verhindert ist. Erst wenn nach beendeter Stromentnahme das Riegelelement in seine Freigabestellung zurücküberführt ist, kann eine verwenderseitige Entkoppelung von Kontakteinrichtung und Stecker durchgeführt werden.

Die Steuereinheit wirkt mit dem ersten Aktuator zusammen. Die Steuereinheit ist mit einem ersten Näherungssensor ausgerüstet, mittels dem die Steuereinheit eine sich dem Dosengehäuse nähernde Person und/oder einen sich dem Dosengehäuse nähernden Gegenstand detektiert. Bei Unterschreitung eines vorgebbaren Näherungsabstandes gibt die Steuereinheit ein Steuersignal an den ersten Aktuator ab, der sodann eine Verschwenkung des Deckels in eine Offenstellung bewirkt. In vorteilhafter Weise ist so ein berührungsloses Verschwenken des Deckels in eine Offenstellung, mithin ein berührungsloses Öffnen der Steckdose realisiert. Dies gestattet es einem Verwender, sich der Steckdose zwecks Ingebrauchnahme zu nähern, wobei sich die Steckdose selbsttätig öffnen, sobald sich der Verwender und/oder der mit der Steckdose zu kontaktierende Stecker der Steckdose soweit nähert, dass der vorgebbare Näherungsabstand erreicht und/oder unterschritten ist.

Um sicherzustellen, dass eine Öffnung der Steckdose durch Verschwenkung des die Steckeröffnung verschließenden Deckels in eine Offenstellung nicht ungewollt beispielsweise dadurch bewirkt wird, dass sich eine Person und/oder ein Gegenstand der Steckdose ohne Absicht der Stromentnahme nähert, ist vorgesehen, dass eine Deckelöffnung nur dann stattfindet, wenn zuvor eine verwenderseitige Freigabe erfolgt ist. Die Steckdose kann zu diesem Zweck über ein manuell zu bedienendes Freigabebetätigungselement beispielsweise in der Ausgestaltung eines Bedienknopfes verfügen. Dieses ist verwenderseitig zunächst zu betätigen, bevor eine automatische Öffnung des Deckels erfolgen kann. Mittels der Freigabe wird beispielsweise der Näherungssensor aktiviert, so dass dieser im Anschluss an eine Aktivierung im Näherungsbereich der Steckdose befindliche Personen und/oder Gegenstände detektieren kann.

Eine verwenderseitige Freigabe kann alternativ auch in anderer Weise erfolgen, beispielsweise mittels funkbasierter Kommunikation, zu welchem Zweck die Steckdose über entsprechende Kommunikationsschnittstellen verfügt, beispielsweise eine WLAN-, eine Bluetooth- und/oder eine Infrarot-Schnittstelle. Besonders bevorzugt ist indes ein RFID-Sender-Empfänger-System, in welchem Fall die Steckdose mit einem entsprechenden Lesegerät als Kommunikationsschnittstelle ausgebildet ist. Verwenderseitig wird der Transponder mitgeführt.

Die verwenderseitige Freigabe beispielsweise durch Aktivierung des Näherungssensors erfolgt bevorzugterweise nur für eine vordefinierte Zeitdauer. Diese kann beispielsweise 10 Sekunden, 20 Sekunden oder 30 Sekunden betragen. Entscheidend ist, dass nach Ablauf dieser vordefinierten Zeitdauer ein Öffnen der Steckdose ohne vorherige erneute Freigabe durch den Benutzer nicht erfolgen kann.

Aus Sicherheitsgründen ist des Weiteren vorgesehen, dass ein Öffnen der Steckdose nur dann erfolgen kann, wenn eine zuvor durchgeführte Messung ergibt, dass die Steckdose spannungslos ist. Eine Bestromung der Steckdose erfolgt erst nach einem ordnungsgemäßen Einführen eines Steckers, wenn dieser also in seiner die Kontakteinrichtung kontaktierenden Position lagegesichert ist.

Eine Überführung des die Steckeröffnung der Steckdose verschließenden Deckels in eine Offenstellung erfolgt mithin nur dann, wenn zuvor eine verwenderseitige Freigabe erfolgt ist, der Näherungssensor innerhalb einer vordefinierten Zeitdauer nach erfolgter Freigabe eine Person und/oder einen Gegenstand im Sensorbereich detektiert und eine zuvor durchgeführte Messung ergeben hat, dass die Steckdose spannungslos ist.

Erfindungsgemäß ist vorgesehen, dass die Steckdose über einen Energiespeicher verfügt, beispielsweise in der Ausgestaltung eines Akkumulators oder eines Kondensators. Der Energiespeicher ist dazu ausgelegt, um im Störfall eine Mitteilung an eine übergeordnete Zentrale bewirken zu können. Die Versendung dieser Mitteilung an die übergeordnete Zentrale kann dem Verwender der Steckdose angezeigt werden, beispielsweise durch eine akustische und/oder optische Signalvermittlung. Nach vorheriger Überprüfung durch die übergeordnete Zentrale kann dann eine Bestromung der Steckdose freigeschaltet sein, so dass es dem Verwender gestattet ist, eine Steckerentriegelung vorzunehmen. Sollte aus Sicherheitsgründen eine Bestromung der Steckdose nicht erfolgen können, wird dem Verwender dies angezeigt. Eine Steckerentnahme kann dann über eine manuell zu betätigende Notentriegelung erfolgen. Dem Verwender wird die Notwendigkeit der manuellen Notentriegelung bevorzugterweise akustisch und/oder optisch angezeigt.

Die erfindungsgemäße Steckdose ist für eine Verwendung im Anwendungsbereich der Elektromobilität ausgerüstet. Sie ermöglicht eine verwenderseitig einfache Handhabung und ist darüber hinaus betriebssicher ausgerüstet. So kann konstruktiv insbesondere vorgesehen sein, dass eine berührungslose Öffnung der Steckdose erfolgen kann, allerdings nur dann, wenn eine zuvor durchgeführte Messung ergeben hat, dass die Steckdose spannungslos gestellt ist. Eine Bestromung der Steckdose findet erst dann statt, wenn ein Stecker in die Steckdose ordnungsgemäß eingesetzt und verriegelt ist. Dabei erfolgt die Steckerverriegelung ebenfalls elektromotorisch automatisch mittels eines entsprechenden Aktuators. Zur Steuerung von erstem Aktuator einerseits und zweitem Aktuator andererseits ist eine vom Dosengehäuse manipulationssicher aufgenommene Steuereinheit vorgesehen.

Die erfindungsgemäße Steckdose kann in zweierlei Ausführungsformen zur Anwendung kommen. Gemäß einer ersten Ausführungsform findet sie als Ladestation für beispielsweise Elektrofahrzeuge Verwendung. Gemäß dieser Ausgestaltung ist sie stationär aufgestellt und dient als "Elektrotankstelle" für Elektrofahrzeuge. Im Verwendungsfall dient das elektrofahrzeugseitig vorhandene Anschlusskabel samt daran angeordnetem Stecker zur elektrischen Kopplung des Elektrofahrzeuges mit der Steckdose.

Gemäß der zweiten Ausführungsform ist die Steckdose elektrofahrzeugseitig ausgebildet. Sie ist mithin fahrzeugseitig verbaut und dient dem Elektrofahrzeug als Schnittstelle zur Verbindung mit einem elektrofahrzeugentfernten Anschlusskabel. Gemäß dieser Ausführungsform ist zwecks Versorgung des Elektrofahrzeugs mit Ladestrom ein Ladekabel steckerseitig in die Steckdose einzuführen.

Die Steckdose ist gemäß einem weiteren Merkmal der Erfindung dadurch gekennzeichnet, dass eine Einrichtung zur Stromüberwachung im Ladefall vorgesehen ist. In vorteilhafter Weise ist es so möglich, einen Ladevorgang zu überwachen. Dabei kann die Überwachung einerseits die ordnungsgemäße Verriegelung eines in die Steckdose eingeführten Steckers sowie andererseits den Ladevorgang als solchen, beispielsweise hinsichtlich des anliegenden Stroms, der anliegenden Spannung, der Ladedauer und/oder dergleichen Ladeparameter betreffen.

Gemäß einem weiteren Merkmal der Erfindung ist vorgesehen, dass eine Überwachung der Motorspeisung stattfindet. Zu diesem Zweck verfügt die erfindungsgemäße Steckdose über eine Überwachungseinrichtung, die kommunikationstechnisch an den ersten Aktuator und/oder den zweiten Aktuator angeschlossen ist. Bevorzugterweise findet eine Überwachung der elektrischen Antriebe sowohl vom ersten als auch vom zweiten Aktuator statt. Die Überwachung der von den Aktuatoren bereitgestellten elektrischen Antriebe erbringen zwei Vorteile. Im Fall einer detektierten Nicht-Speisung kann ein bestimmungsgemäßer Betrieb der Steckdose nicht mehr gewährleistet werden. In diesem Fall wird die Steckdose bevorzugterweise automatisch außer Betrieb gesetzt. Eine Notentriegelung bleibt natürlich möglich. Andererseits kann im Falle einer Störung festgestellt werden, ob diese Störung mit einer nicht mehr ordnungsgemäßen Motorspeisung zusammenhängt. Sollte dies nicht der Fall sein, kann per Ausschlussverfahren nach anderen möglichen Fehlerquellen gesucht werden. Auch insoweit ist die Überwachung der Stromentnahme durch die Motoren der Aktuatoren von Vorteil.

Gemäß einem weiteren Merkmal der Erfindung verfügt die Steckdose über einen Sensor zur Detektion der Endstellungen des Deckels. Zumindest die Einnahme der bestimmungsgemäßen End-Verschlussstellung des Deckels wird detektiert, beispielsweise mittels eines Hallsensors. Aber auch die bestimmungsgemäße Offenstellung des Deckels lässt sich mit einem entsprechenden Sensor ermitteln. Die Detektion der Stellung des Deckels kann in vorteilhafter Weise dazu genutzt werden, vorbeschriebene Überwachungszyklen zu starten und/oder zu beenden. Ferner kann die detektierte Deckelstellung für Plausibilitätsprüfungen genutzt werden, insbesondere nach dem Ausschlussverfahren.

Die Steckeröffnung der Steckdose ist gemäß einem weiteren Merkmal der Erfindung von einer ringförmigen Beleuchtungseinrichtung umgeben. Eine bestimmungsgemäße Ingebrauchnahme der Steckdose ist so auch im Dunklen in einfacher Weise möglich. Dabei verfügt die Beleuchtungseinrichtung gemäß einem weiteren Merkmal der Erfindung über ein optisches Bauelement, beispielsweise eine LED- oder einen Lichtwellenleiter beziehungsweise eine Lichtwellenleiter-LED-Kombination. Im Falle eines Lichtwellenleiters umschließt dieser bevorzugterweise die Steckeröffnung und wird durch eine innerhalb des Dosengehäuses angeordnete Lichtquelle, beispielsweise eine LED und/oder eine LED-Anordnung gespeist.

Gemäß einem weiteren Merkmal der Erfindung ist vorgesehen, dass die Steckdose mit Kommunikationsstellen ausgerüstet ist. Als Kommunikationsschnittstellen kommen insbesondere Funkschnittstellen in Frage, wie zum Beispiel WLAN oder Bluetooth, aber auch andere Schnittstellen, wie zum Beispiel RS485, CAN, LIN und/oder Single Wire, und/oder RS232 und/oder Ethernet.

Gemäß einem weiteren Merkmal der Erfindung ist vorgesehen, dass die Kontaktierungseinrichtung ein einseitig offenes und die Kontaktbuchsen aufnehmendes Gehäuse sowie einen Gehäusedeckel aufweist, wobei der Gehäusedeckel Öffnungen für die Kontaktbuchsen tragenden Anschlusskabel aufweist.

Die Kontaktierungseinrichtung ist erfindungsgemäß als separat handhabbares Bauteil ausgerüstet. Dieses kann endmontiert und vor einem Einbau in das Dosengehäuse mit den die Kontaktbuchsen tragenden Anschlusskabeln bestückt werden. Alternativ und auch bevorzugt ist indes eine Ausgestaltungsform, in der die erfindungsgemäße Steckdose herstellerseitig vorausgerüstet und alsdann am Aufstellungsort durch Positionierung der Anschlusskabel verkabelt wird. In diesem Zusammenhang ist die erfindungsgemäße Ausgestaltung der Kontaktierungseinrichtung aus Gehäuse einerseits und Gehäusedeckel andererseits von Vorteil, weil eine nachträgliche Bestückung mit Kontaktbuchsen bzw. mit endseitig mit Kontaktbuchsen ausgerüsteten Anschlusskabeln ermöglicht ist. Das Gehäuse und der Deckel der Kontakteinrichtung können zu diesem Zweck in eine vorverrastete Stellung einerseits und in ein endverrastete Stellung andererseits gebracht werden. In der vorverrasteten Stellung ist der Deckel unverlierbar am Gehäuse angeordnet, wobei in dieser Stellung noch eine Bestückung des Gehäuses mit Kontaktbuchsen gestattet ist. Sobald die Kontaktbuchsen eingesetzt sind, kann der Deckel gegenüber dem Gehäuse in seine verrastete Endstellung gebracht werden, in welcher nicht nur der Deckel, sondern auch die vom Gehäuse aufgenommenen Kontaktbuchsen unverlierbar angeordnet sind.

Mit der erfindungsgemäßen Steckdose wird insgesamt eine Steckdose bereitgestellt, die konstruktiv eine einfache Handhabung durch einen Verwender gestattet und dies bei gleichzeitiger Gewährung einer Verbesserung des Verwenderschutzes. So gewährleistet die erfindungsgemäße Konstruktion eine automatisierte Bedienung der Steckdose einerseits und stellt andererseits sicher, dass zum Schutze eines Verwenders eine Bestromung der Steckdose nur dann stattfindet, wenn ein ordnungsgemäß in die Steckdose eingeführter Stecker positionssicher verriegelt gehalten ist.

Weitere Merkmale und Vorteile der Erfindung ergeben sich aus der nachfolgenden Beschreibung anhand der Figuren gemäß einem Ausführungsbeispiel. Dabei zeigen
- Fig. 1: in schematisch perspektivischer Darstellung eine erfindungsgemäße Steckdose;
- Fig. 2: in schematischer Explosionsdarstellung die erfindungsgemäße Steckdose nach Fig. 1;
- Fig. 3: in schematischer Perspektivdarstellung die erfindungsgemäße Steckdose nach Fig. 1 ohne Dosendeckel;
- Fig. 4: in schematischer Explosionsdarstellung die erfindungsgemäße Steckdose nach Fig. 3;
- Fig. 5: in schematischer Explosionsdarstellung eine Kontakteinrichtung;
- Fig. 6: in schematischer Perspektivdarstellung die Kontakteinrichtung nach Fig. 5;
- Fig. 7: in schematischer Explosionsdarstellung einen ersten Aktuator;
- Fig. 8: in schematischer perspektivischer Rückansicht die erfindungsgemäße Steckdose nach Fig. 1;
- Fig. 9: in schematischer perspektivischer Darstellung eine Kontakteinrichtung;
- Fig. 10: in schematischer Explosionsdarstellung die Kontakteinrichtung nach Fig. 9;
- Fig. 11: in schematischer Perspektivdarstellung die Kontakteinrichtung nach Fig. 9;
- Fig. 12: in einer schematisch perspektivischen Rückansicht die Kontakteinrichtung nach Fig. 11;
- Fig. 13: in schematischer Perspektivdarstellung eine Kontakteinrichtung gemäß einer alternativen Ausführungsform;
- Fig. 14: in schematischer perspektivischer Rückansicht die Kontakteinrichtung nach Fig. 13;
- Fig. 15: in schematischer Explosionsdarstellung die Kontakteinrichtung nach Fig. 14;
- Fig. 16: in schematischer Explosionsdarstellung von hinten die Kontakteinrichtung nach Fig. 15;
- Fig. 17: in schematischer perspektivischer Darstellung ausschnittsweise den zweiten Aktuator der erfindungsgemäßen Steckdose mit Riegelelement;
- Fig. 18: in schematischer perspektivischer Darstellung ausschnittsweise den zweiten Aktuator der erfindungsgemäßen Steckdose ohne Riegelelement;
- Fig. 19: in schematischer Draufsicht von oben den zweiten Aktuator nach Fig. 17;
- Fig. 20: in schematischer perspektivischer Darstellung ausschnittsweise den zweiten Aktuator der erfindungsgemäßen Steckdose gemäß einer weiteren Ausführungsform;
- Fig. 21: in schematisch perspektivischer Zusammenbaudarstellung den zweiten Aktuator gemäß Fig. 20 und
- Fig. 22: in schematischer perspektivischer Ansicht von hinten die erfindungsgemäße Steckdose.

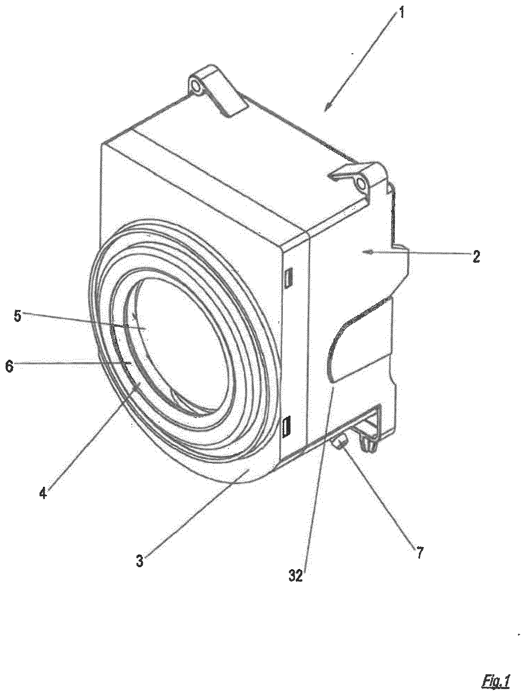

Fig. 1 lässt die erfindungsgemäße Steckdose 1 erkennen. In der gezeigten Ausführungsform liegt die Steckdose 1 als Bestandteil einer in den Figuren nicht näher dargestellten, sogenannten "wallbox" vor, das heißt als stationär montierte Steckdose 1.

Die Steckdose 1 dient als "Stromtankstelle" für ein Elektrofahrzeug, insbesondere für ein Elektroauto. Im bestimmungsgemäßen Verwendungsfall erfolgt die Bestromung der Steckdose 1, so dass eine Aufladung des von einem an die Steckdose 1 angeschlossenen Elektroauto mitgeführten Energiespeichers stattfinden kann.

Die Steckdose 1 verfügt über ein Dosengehäuse 2. Dieses nimmt im endmontierten Zustand eine im Weiteren noch näher beschriebene Kontakteinrichtung 16 auf. Frontseitig ist das Dosengehäuse 2 mittels eines Dosendeckels 3 verschlossen. Für einen Steckerzugriff auf die im Dosengehäuse 2 angeordnete Kontakteinrichtung 16 stellt der Dosendeckel 3 eine Steckeröffnung 4 bereit. Durch diese hindurch ist im Verwendungsfall ein mit der Steckdose 1 gekoppelter Stecker geführt.

Die Steckeröffnung 4 ist mittels eines Deckels 5 verschließbar. Fig. 1 zeigt die Verschlussstellung des Deckels 5, in welcher Verschlussstellung die Steckeröffnung 4 mittels des Deckels 5 verschlossen ist. Der Deckel 5 ist verschwenkbar ausgebildet und kann aus der in Fig. 1 gezeigten Verschlussstellung in eine Offenstellung verschwenkt werden, in welcher Stellung die Steckeröffnung 4 für ein Hindurchführen eines in den Figuren nicht näher dargestellten Steckers freigegeben ist.

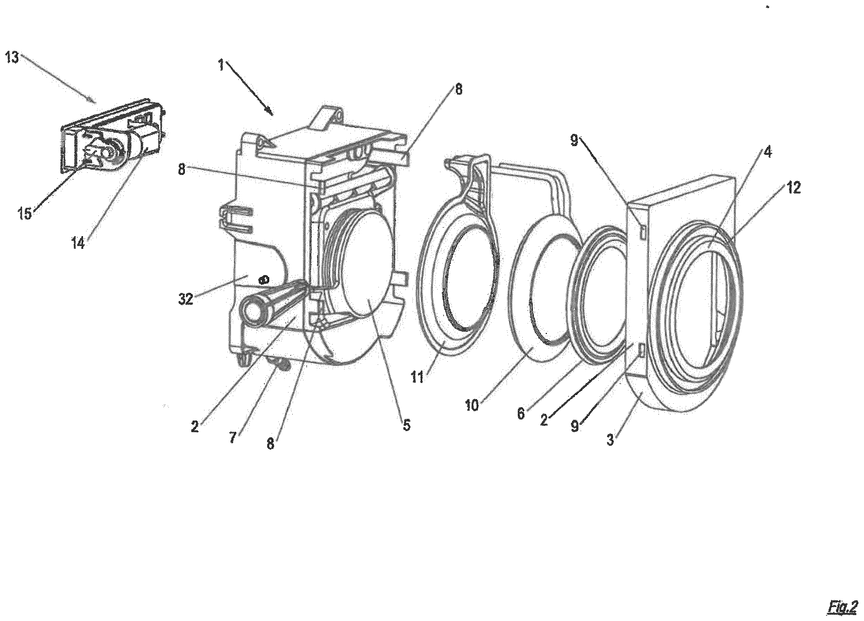

Die explosionsartige Darstellung nach Fig. 2 lässt den Aufbau der erfindungsgemäßen Steckdose 1 genauer erkennen. Wie sich nach der Darstellung aus Fig. 1 ergibt, ist das Dosengehäuse 2 mit dem Dosendeckel 3 im endmontierten Zustand verrastet. Zu diesem Zweck weist der Dosendeckel 3 Öffnungen 9 auf, in die im endmontierten Zustand dosenseitig ausgebildete Rasthaken 8 eingreifen.

Das Dosengehäuse 2 ist vorzugsweise wasserdicht, zumindest aber wasserabweisend ausgebildet. Nichtsdestotrotz verfügt das Dosengehäuse 2 über einen Wasserablaufstutzen 7, um etwaiges im Dosengehäuse 2 befindliches Wasser, sei es Schwitzwasser und/oder Außenwasser abzuführen.

Um insbesondere auch im Dunkeln eine komfortable Handhabung zu gestatten, ist die Steckeröffnung 4 von einer Beleuchtungseinrichtung umgeben. Im gezeigten Ausführungsbeispiel umfasst die Beleuchtungseinrichtung einen Lichtwellenleiter 6. Dieser ist, wie insbesondere die Zusammenbaudarstellung nach Fig. 1 erkennen lässt, innenseitig der Steckeröffnung 4 angeordnet, was ein eindeutiges Auffinden der Steckeröffnung 4 auch im Dunkeln ermöglicht. Zur Abstützung des Lichtwellenleiters 6 dient ein Stützring 10. Dieser ist im endmontierten Zustand innenseitig des Dosendeckels 3 anliegend ausgebildet.

Vorderseitig ist der Dosendeckel 3 mit einem umlaufenden Dichtring 11 ausgerüstet, der von einer deckelseitigen Nut 12 aufgenommen ist.

Das Dosengehäuse 2 nimmt des Weiteren einen ersten Aktuator 13 auf. Dieser verfügt über einen elektromotorischen Antrieb 14 sowie über einen damit in Wirkverbindung stehenden Schwenkhebel 15. Der erste Aktuator 13 wirkt im Betriebsfall mit dem Deckel 5 zusammen und bewirkt dessen Verschwenkung aus der in Fig. 2 gezeigten Verschlussstellung in eine Offenstellung. Eine Rücküberführung des Deckels 5 aus der Offenstellung in die Verschlussstellung kann entweder gleichfalls mittels des ersten Aktuators 13 oder mittels einer in Offenstellung des Deckels 5 unter Federvorspannung stehenden Feder bewerkstelligt werden, wobei eine federinduzierte Rückstellung des Deckels 5 nur dann möglich ist, wenn durch den ersten Aktuator 13 die Bewegungsrückführung freigegeben ist.

Wie die Darstellung nach Fig. 2 ferner erkennen lässt, ist der Aktuator 13 samt Antrieb 14 und einer im Weiteren noch näher erläuterten Steuereinheit 42 mit Bezug auf die Zeichnungsebene nach Fig. 2 im unteren Teil des Gehäuses 2 angeordnet. Gemäß einer alternativen Ausgestaltung sind zumindest die Steuereinheit 42 sowie gegebenenfalls weitere elektronische Baukomponenten in einem mit Bezug auf die Zeichnungsebene nach Fig. 2 oberen Bereichs des Dosengehäuses 2 angeordnet. Eine solche Anordnung bringt den Vorteil, dass sich im Falle einer etwaigen Undichtigkeit des Dosengehäuses 2 im unteren Bereich des Dosengehäuses 2 ansammelndes Wasser nicht in Kontakt mit der Steuereinheit 42 oder anderen dort befindlichen Baukomponenten kommt. Auch wenn das Dosengehäuse 2 mit einem Wasserablaufstutzen 7 ausgerüstet ist, kann es in ungewünschter Weise zu Wasseransammlungen im unteren Teilbereich des Dosengehäuses 2 kommen, weshalb es insofern bevorzugt ist, zur Vermeidung ungewollter Schäden an der Elektronik selbige im oberen Teilbereich des Dosengehäuses 2 anzuordnen.

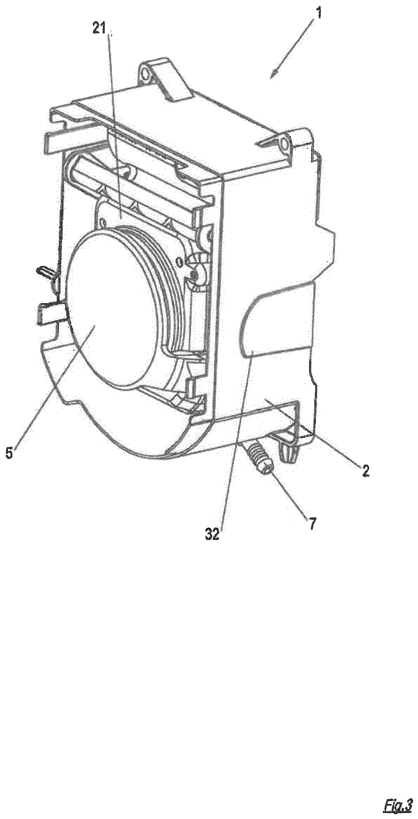

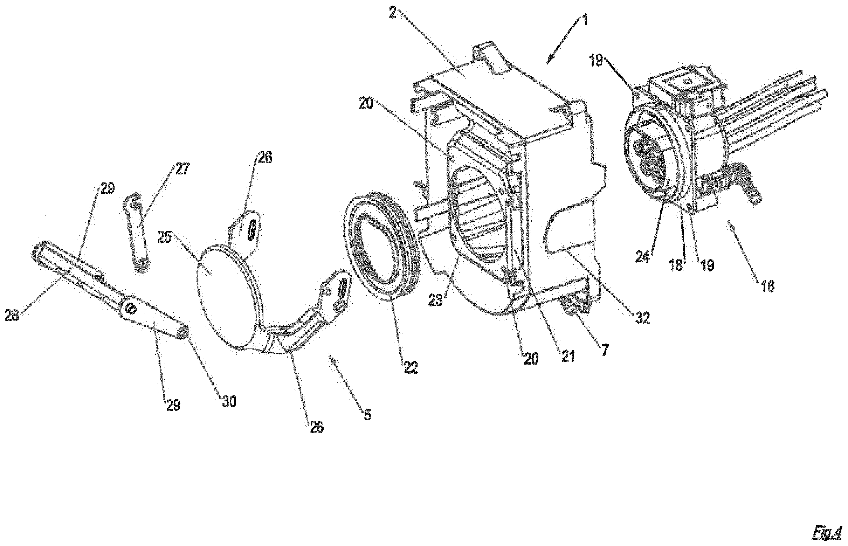

Fig. 3 lässt die Steckdose 1 gemäß Fig. 1 erkennen, allerdings ohne frontseitigen Gehäusedeckel 3. Zu erkennen ist aus dieser Darstellung, dass im Dosengehäuse 2 ein Tragabschnitt 21 angeordnet ist, der mit dem Deckel 5 zusammenwirkt. Dieser Tragabschnitt 21 dient der positionssicheren Anordnung der Kontakteinrichtung 16 innerhalb des Dosengehäuses 2, wie sich insbesondere aus der Explosionsdarstellung nach Fig. 4 ergibt.

Fig. 4 lässt erkennen, dass das Dosengehäuse 2 und der Tragabschnitt 21 bevorzugterweise als einstückiges Kunststoffteil ausgebildet sind. Der Tragabschnitt 21 nimmt im endmontierten Zustand die Kontakteinrichtung 16 auf. Die Kontakteinrichtung weist zu diesem Zweck eine mit Gewindebohrungen 19 ausgerüstete Flanschplatte 18 auf. Diese liegt im endmontierten Zustand innenseitig des Tragabschnitts 21 an. Mittels entsprechender Schrauben 17 erfolgt eine lösbare Verbindung der Kontakteinrichtung 16 mit dem Tragabschnitt 21 des Dosengehäuses 2, zu welchem Zweck der Tragabschnitt 21 Durchgangsbohrungen 20 aufweist, durch die hindurch die Schrauben 17 jeweils geführt sind.

Die Kontakteinrichtung 16 trägt auf ihrer dem Dosengehäuse 2 zugewandten Seite der Flanschplatte 18 einen Ringstutzen 24. Dieser Ringstutzen 24 durchgreift im endmontierten Zustand die im Tragabschnitt 21 ausgebildete Öffnung 23.

Zur fluiddichten Anordnung des Ringstutzens 24 in der Öffnung 23 dient die Dichtung 22. Ferner dient die Dichtung 22 in Verschlussstellung des Deckels 5 einem dichten Anliegen des Deckels 5 am Tragabschnitt 21.

Der Deckel 5 verfügt über eine Verschlussplatte 25, sowie über einstückig an der Verschlussplatte 25 angeordnete Deckelarme 26. Diese Deckelarme 26 wirken mit einem Antriebshebel 28 zusammen, der über Hebelarme 29 verfügt, die deckelseitig Fortsätze 30 tragen, die im endmontierten Zustand in entsprechend ausgebildete Langlöcher der Deckelarme 26 eingreifen. Der Antriebshebel 28 steht seinerseits in Wirkverbindung mit dem Schwenkhebel 27, der in Wirkverbindung mit dem elektromotorischen Antrieb 14 des ersten Aktuators 13 steht.

Im endmontierten Zustand durchgreifen die vom Antriebshebel 28 bereitgestellten Fortsätze 30 die von den Deckelarmen 26 bereitgestellten Langlöcher. Die Deckelarme 26 stellen ihrerseits endseitig jeweils einen Fortsatz bereit, die in zugehörige Führungskonturen 32 des Dosengehäuses 2 eingreifen. Diese Wirkverbindung von Antriebshebel 28, Deckel 5 und Gehäuse 2 bewirkt im Betriebsfall eine geführte Verschwenkbewegung des Deckels 5. Dabei besteht die Besonderheit dieser Konstruktion darin, dass der Deckel auch bei einer Verschwenkbewegung vollständig innerhalb des Dosengehäuses 2 verbleibt und in den Spaltraum zwischen Gehäusewand und Tragabschnitt 21 verschwenkt wird. Darüber hinaus bewirkt die Führungskontur 32, dass sich die Verschlussplatte 25 des Deckels 5 in Verschlussstellung des Deckels 5 an die Dichtung 22 andrückt.

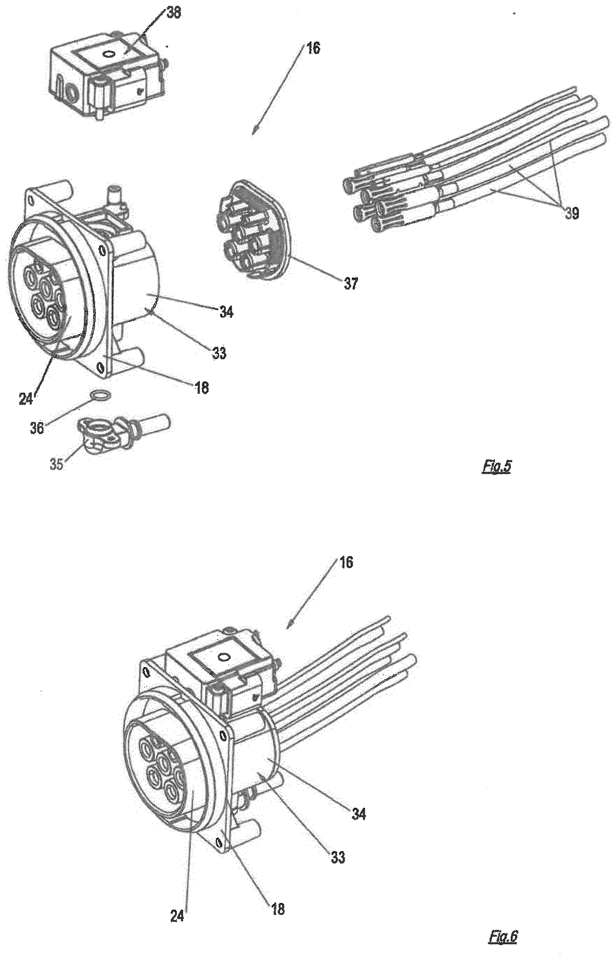

Die Figuren 5 und 6 lassen die im endmontierten Zustand vom Dosengehäuse 2 aufgenommene Kontakteinrichtung 16 im Detail erkennen.

Die Kontakteinrichtung 16 verfügt über ein Gehäuse 33. Dieses Gehäuse 33 stellt einen Gehäusegrundkörper 34, die schon vorbeschriebene Flanschplatte 18 sowie den Ringstutzen 24 bereit. Um etwaiges sich im Gehäuse 3 angesammeltes Wasser abführen zu können, ist ein Wasserablauf 35 vorgesehen, der unter Zwischenordnung eines Dichtrings 36 am Gehäuse 33 angeordnet ist.

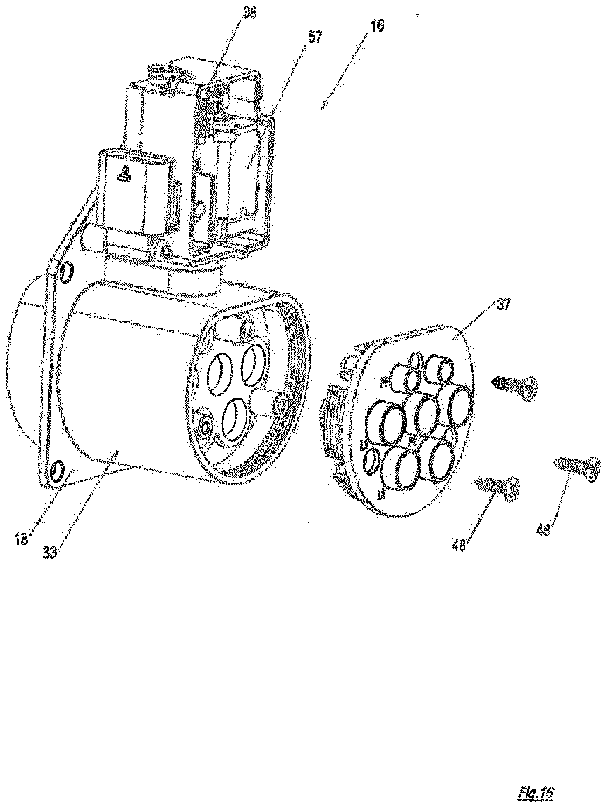

Das Gehäuse 33 trägt einen zweiten Aktuator 38. Dieser dient dazu, ein in den Figuren nicht näher dargestelltes Riegelelement zur Positionssicherung eines in die Steckdose 1 eingeführten und mit der Kontakteinrichtung 16 kontaktierten Steckers zu verfahren. Zu diesem Zweck stellt der Aktuator 38 einen elektromotorischen Antrieb 57 bereit, wie sich dies insbesondere aus der Darstellung nach Fig. 16 ergibt. Bei dem Riegelelement kann es sich beispielsweise um einen Bolzen handeln, der mit seinem gehäuseseitigen Endabschnitt in den vom Gehäuse umgebenen Volumenraum eingefahren werden kann. Dabei greift der gehäuseseitige Endabschnitt in eine Gegenbohrung, die von einem mit der Kontakteinrichtung 16 kontaktierten Stecker bereitgestellt ist. Es erfolgt so eine formschlüssige Verbindung, so dass eine Lagesicherung des so positionierten Steckers gegeben ist. Ohne Rücküberführung des Riegelelements in die Nichtverschlussstellung kann der die Kontakteinrichtung 16 kontaktierende Stecker nicht aus dem Dosengehäuse 2 herausgezogen werden.

Das Gehäuse 3 ist endseitig offen ausgebildet. Zum Verschluss der offenen Endseite dient ein Gehäusedeckel 37. Dieser ist, wie dies im Weiteren noch näher beschrieben werden wird, mit Öffnungen 49 ausgerüstet, durch die hindurch jeweils mit Kontaktbuchsen 47 ausgerüstete Anschlusskabel 39 geführt sind.

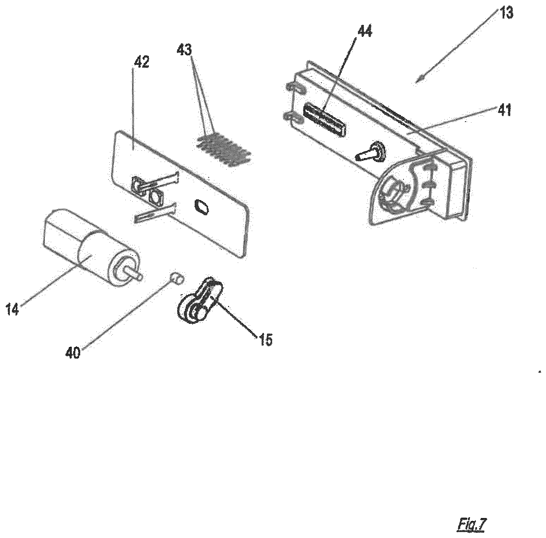

Fig. 7 lässt in Explosionsdarstellung den ersten Aktuator 13 erkennen. Dieser verfügt über einen elektromotorischen Antrieb 14 und einen damit in Wirkverbindung stehenden Schwenkhebel 15. Im endmontierten Zustand ist der elektromotorische Antrieb 14 auf einer Trägerplatte 21 montiert, die auch eine Lagerstelle für einen die Antriebswelle des elektromotorischen Antriebs 14 lagernden Lagerring 40 bereitstellt.

Zur Steuerung des Aktuators 13 dient eine Steuereinheit 42, die im gezeigten Ausführungsbeispiel als integraler Bestandteil des Aktuators 13 ausgerüstet ist. Diese Ausgestaltung ist besonders platzsparend und ermöglicht eine vereinfachte Montage.

Die Steuereinheit 42 ist mit Anschlussstiften 43 ausgerüstet, die im endmontierten Zustand durch einen Schlitz 44 in der Trägerplatte 41 geführt sind.

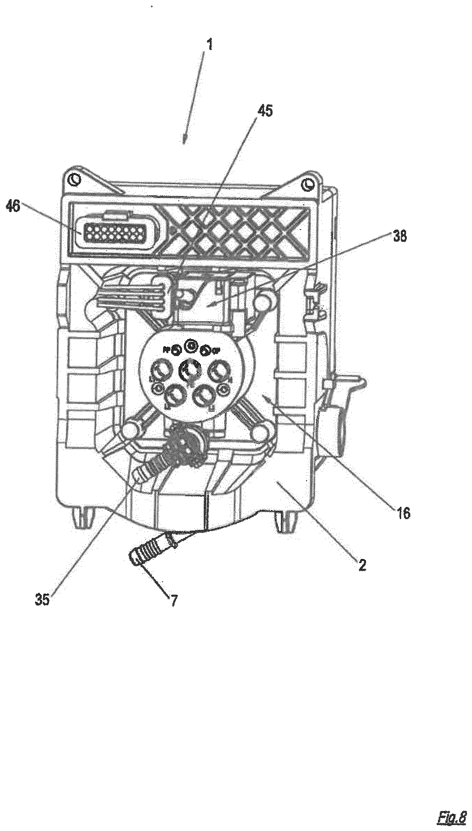

Fig. 8 lässt die Steckdose 1 in einer perspektivischen Rückansicht erkennen. Wie sich aus dieser Darstellung ergibt, ist im endmontierten Zustand ein Kontaktstecker 45 auf die Anschlussstifte 43 der Steuereinheit 42 gesteckt.

Die Steckdose 1 verfügt bevorzugterweise über weitere Anschlüsse, insbesondere Kommunikationsanschlüsse, die im gezeigten Ausführungsbeispiel über eine durch einen Deckel 46 verschlossene Öffnung zugänglich sind.

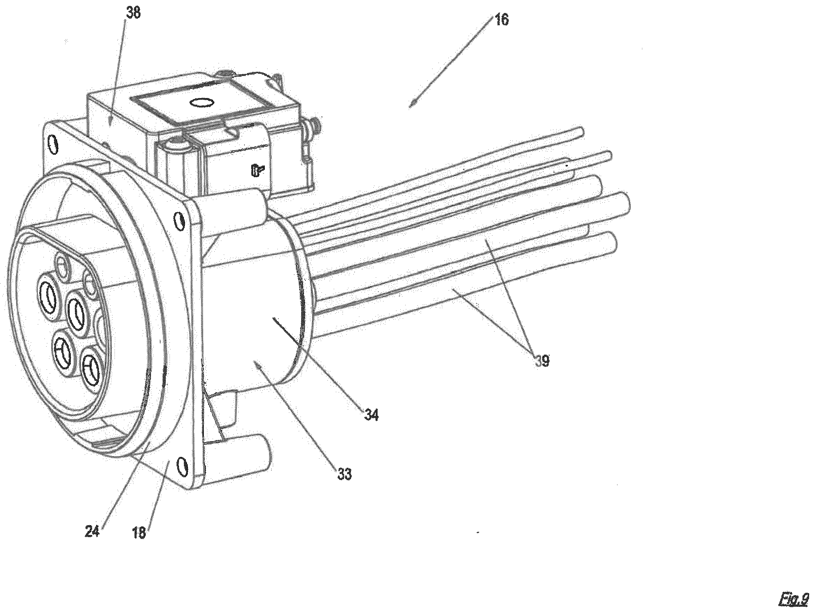

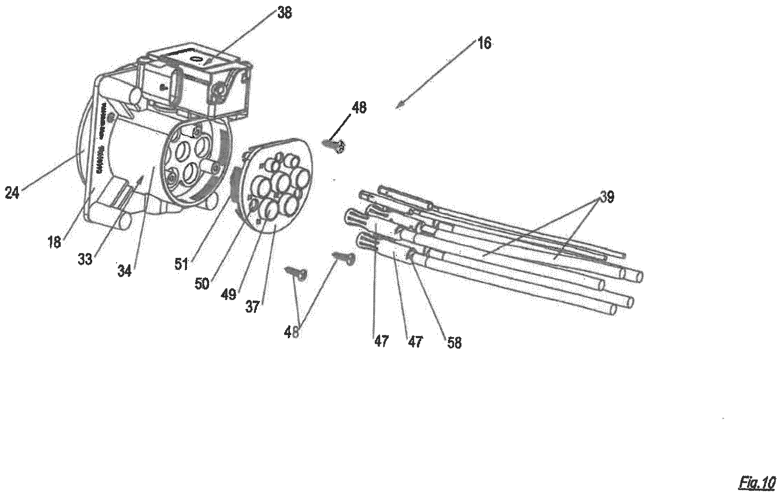

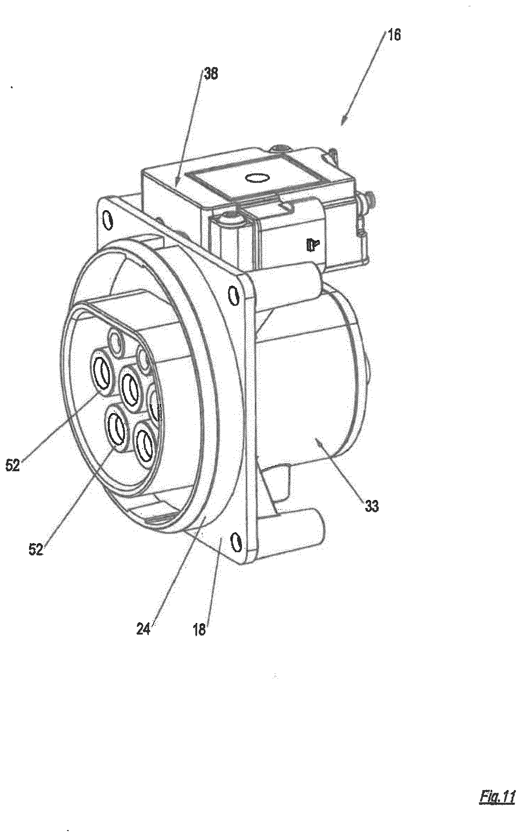

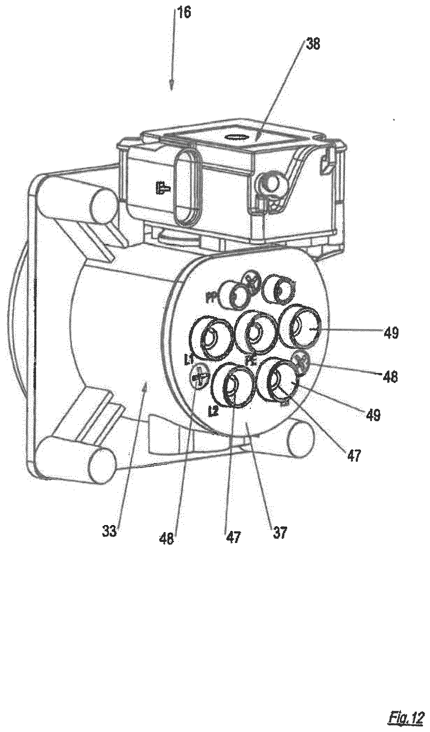

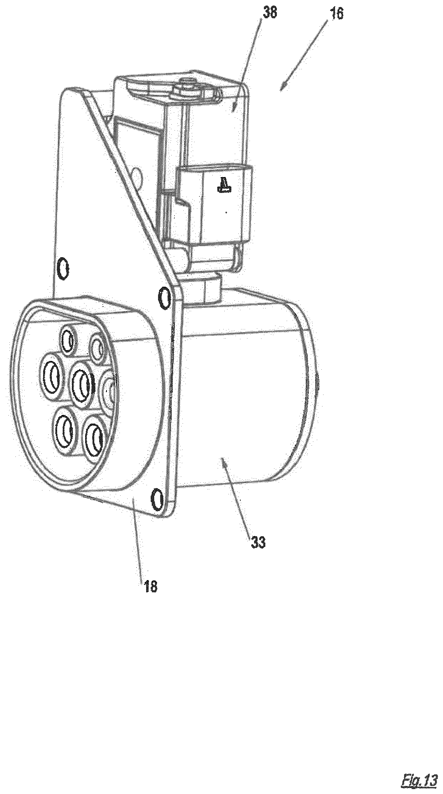

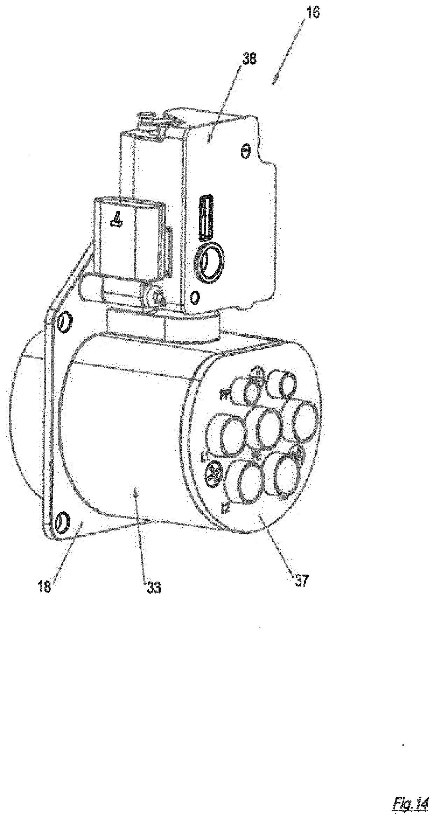

Die weiteren Figuren 9 bis 10 zeigen im Detail eine Kontakteinrichtung 16, wobei die Figuren 1 bis 12 eine erste Ausführungsform und die Figuren 13 bis 16 eine zweite Ausführungsform betreffen. Die Ausführungsformen unterscheiden sich in der Ausgestaltung der Flanschplatte 18 sowie der Größenausgestaltung und Ausrichtung des zweiten Aktuators 38 in Relation zum Gehäuse 33. Ansonsten ist der Aufbau der jeweils gezeigten Kontakteinrichtungen 16 identisch.

Wie sich aus einer Zusammenschau der Figuren 9 bis 16 ergibt, verfügt die Kontakteinrichtung 16 über ein Gehäuse 33. Im Inneren dieses Gehäuses 33 sind von einer Platte getragen Führungshülsen 52 angeordnet, die als Aufnahme für endseitig der Anschlusskabel 39 angeordnete Kontaktbuchsen 47 dienen. Die Führungshülsen 52 weisen vorderseitig einen umlaufenden Vorsprung in Form eines Stützrings auf, an dem die Kontaktbuchsen 47 im endmontierten Zustand jeweils anliegen. Ein Herausziehen der Kontaktbuchsen 47 nach vorne ist so unterbunden.

Für eine rückseitige Abstützung der Kontaktbuchsen 47 dient der Gehäusedeckel 37. Dieser ist mit Bohrungen 50 ausgerüstet, durch die hindurch im endmontierten Zustand die Anschlusskabel 39 geführt sind.

Der Gehäusedeckel 37 verfügt gehäuseseitig über Rastzungen 51. Diese weisen eine gerippte Außenkontur auf, die mit einer vom Gehäuse 33 bereitgestellten Gegenkontur zusammenwirken. In einer ersten verrasteten Stellung, der sog. vormontierten Stellung befinden sich der Gehäusedeckel 37 und das Gehäuse 33 in einer solchen Stellung, dass eine Bestückung der Führungshülsen 52 durch die Bohrungen 50 hindurch mit Kontaktbuchsen 47 und den daran angeordneten Anschlussleitungen 39 möglich ist. Sobald eine Bestückung abgeschlossen ist, kann der Gehäusedeckel 37 in seine endverrastete Stellung gebracht werden, in der die Kontaktbuchsen lagegesichert und vor einem ungewollten Herausziehen nach hinten gesichert sind. Für eine dauerhaft sichere Anordnung des Gehäusedeckels 37 am Gehäuse 33 kann eine Verschraubung mittels entsprechender Schrauben 48 vorgesehen sein.

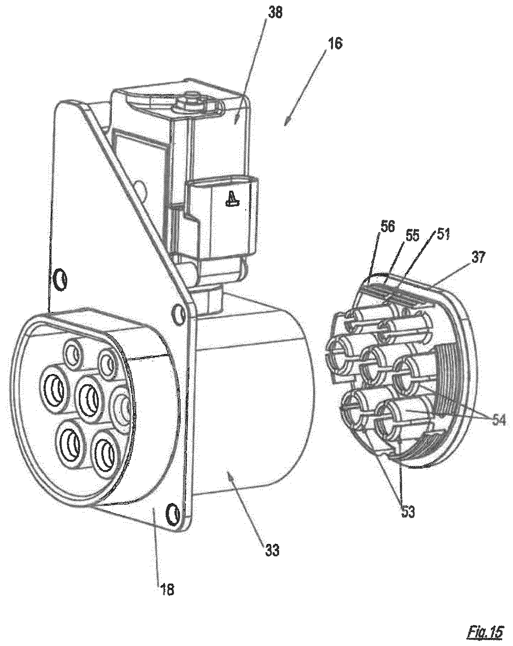

Wie sich insbesondere aus der Darstellung nach Fig. 15 ergibt, trägt der Gehäusedeckel 37 gehäuseseitig Hülsen 53. Die Hülsen 53 sind unter Ausbildung von Wandabschnitten 54 geschlitzt ausgebildet. Infolge eines Einführens von Kontaktbuchsen 47 können die Wandabschnitte 54 der zugehörigen Hülsen 53 federelastisch ausfedern und nach einem vollständigen Einführen der Kontaktbuchsen 47 wieder zurück in ihre Raststellung verfahren. Dabei liegen die Hülsen 53 in ihrer Raststellung an entsprechenden umlaufenden Randkanten 58 der jeweiligen Kontaktbuchsen 47 an.

Wie sich aus Fig. 15 ferner ergibt, verfügen die Rastzungen 51 jeweils über zwei Rastabschnitte 55 und 56. Die schon vorbeschriebene Zweiraststellung des Gehäusedeckels 37 relativ gegenüber dem Gehäuse 33 ist so bewerkstelligt.

Die Funktionsweise der erfindungsgemäßen Steckdose 1 ist die Folgende:

Ein in den Figuren nicht näher dargestellter Näherungssensor wirkt mit der Steuereinheit 42 zusammen. Bei einem solchen Näherungssensor kann es sich beispielsweise um einen induktiven, kapazitiven, magnetischen, optischen oder elektromagnetischen Sensor handeln. Entscheidend ist, dass der Näherungssensor dazu geeignet ist, sich dem Dosengehäuse 2 nähernde Personen und/oder sich dem Dosengehäuse 2 nähernde Gegenstände zu detektieren.

Wird im Betriebsfall eine sich nähernde Person und/oder ein sich nähernder Gegenstand detektiert, so gibt die Steuereinheit 42 ein Steuersignal an den ersten Aktuator 13 ab, infolge dessen dieser ein Verschwenken des Deckels 5 in eine Offenstellung bewerkstelligt. Dabei erfolgt die Abgabe eines solchen Steuersignals erst mit Unterschreiten eines vorgebbaren Näherungsabstandes, der beispielsweise 10 cm, 20 cm oder mehr betragen kann.

Von Vorteil dieser Ausgestaltung ist, dass sich die Steckdose 1 vollautomatisch öffnet, sobald sich ein Verwender mit seiner Hand oder einem in die Steckdose einzusteckenden Stecker der Steckdose 1 nähert.

Der Näherungssensor dient zudem dazu, zu detektieren, ob sich eine Person und/oder ein Gegenstand vom Dosengehäuse 2 entfernt. Die Detektion einer solchen Entfernung führt dazu, dass die Steuereinheit 42 ein entsprechendes Steuersignal an den ersten Aktuator 13 abgibt, woraufhin dieser den Deckel 5 zurück in seine in Fig. 1 gezeigte Verschlussstellung verfährt. Ein automatisches Schließen der Steckdose 1 wird so bewerkstelligt, sobald sich der aus der Steckdose 1 gezogene Stecker und/oder eine den Stecker ziehende Person nicht mehr im sensorisch erfassten Nahbereich der Steckdose 1 befinden.

Ein näherungssensorinduziertes Öffnen des Deckels 5 setzt aus Sicherheitsgründen eine vorangegangene benutzerseitige Freischaltung voraus. Dabei ist die Freischaltung bevorzugterweise nur für eine bestimmte Zeitdauer von zum Beispiel 10 sec bis 40 sec gültig. Wird innerhalb dieses Zeitfensters keine Annäherung an die Steckdose 1 detektiert, hat eine benutzerseitige erneute Freischaltung stattzufinden, um eine aktuatorinduzierte Öffnung des Deckels 5 bewerkstelligen zu können.

Eine vorherige Freischaltung erfolgt benutzerseitig beispielsweise per Funk über eine vom Benutzer oder im Elektroauto mitgeführte Funkeinrichtung. Alternativ kann auch die Steckdose 1 über eine entsprechende Freigabeeinrichtung verfügen, die verwenderseitig manuell zu betätigen ist.

Zudem erfolgt nur dann eine Überführung des Deckels 5 in eine Offenstellung, wenn die Steckdose 1 spannungslos ist, das heißt vor einer Verfahrbewegung des Deckels 5 wird eine Überprüfung der Steckdose 1 dahingehend durchgeführt, ob diese bestromt ist oder nicht. Sollte eine Bestromung vorliegen, ist eine Freischaltung zum öffnen des Deckels 5 nicht möglich, was dem Benutzer der Steckdose 1 bevorzugterweise akustisch und/oder visuell wahrnehmbar angezeigt wird.

Ein automatisches Schließen des Deckels 5 setzt voraus, dass ein zuvor in die Steckdose 1 ordnungsgemäß eingeführter Stecker aus dieser wieder entfernt ist. Zu diesem Zweck verfügt die Steckdose 1 über einen Steckersensor, der eine Freischaltung des Näherungssensors bewerkstelligt, sobald er Stecker aus der Steckdose 1 gezogen ist. Sobald dann der Näherungssensor einen nicht mehr im Nahbereich der Steckdose 1 befindlichen Stecker und/oder eine Person detektiert, erfolgt eine vollautomatische Schließung des Deckels 5.

Der zweite vom Dosengehäuse aufgenommene Aktuator 38 dient dazu, einen ordnungsgemäß in die Steckdose 1 eingeführten Stecker mittels eines verfahrbaren Riegelelements positionssicher zu lagern. Die Verriegelung des Steckers sorgt dabei dafür, dass im Stromentnahmefall ein ungewolltes Entfernen des Steckers aus der Steckdose 1 nicht möglich ist. Erst wenn die Steckdose 1 wieder stromlos gestellt ist, kann das vom zweiten Aktuator 38 betätigte Riegelelement in seine Offenstellung überführt werden, was dann ein Ziehen des Steckers 1 ermöglicht.

Zur Steuerung des zweiten Aktuators 38 dient ebenfalls die Steuereinheit 42, die sowohl mit dem ersten als auch mit dem zweiten Aktuator in kommunikationstechnischer Verbindung steht.

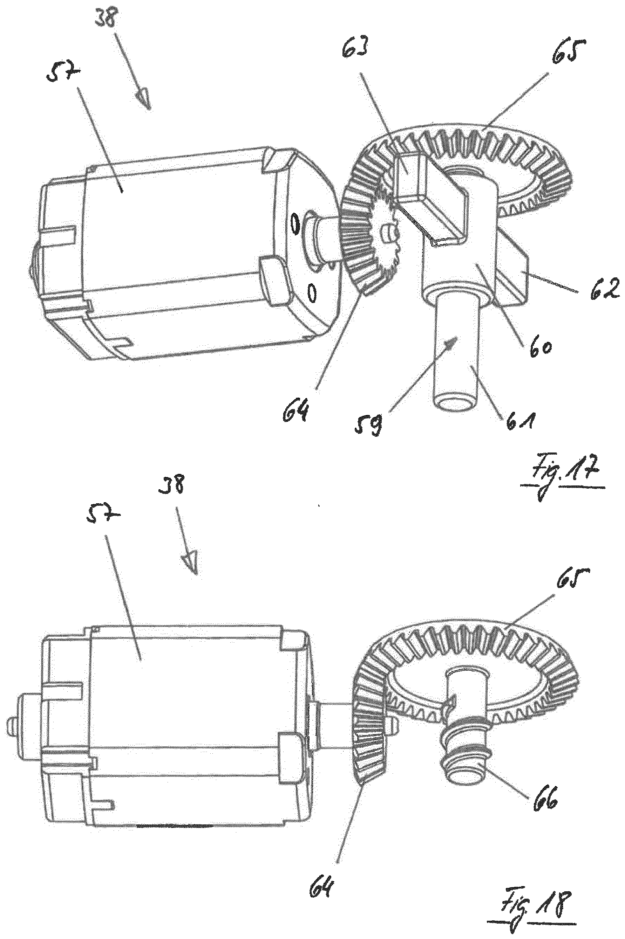

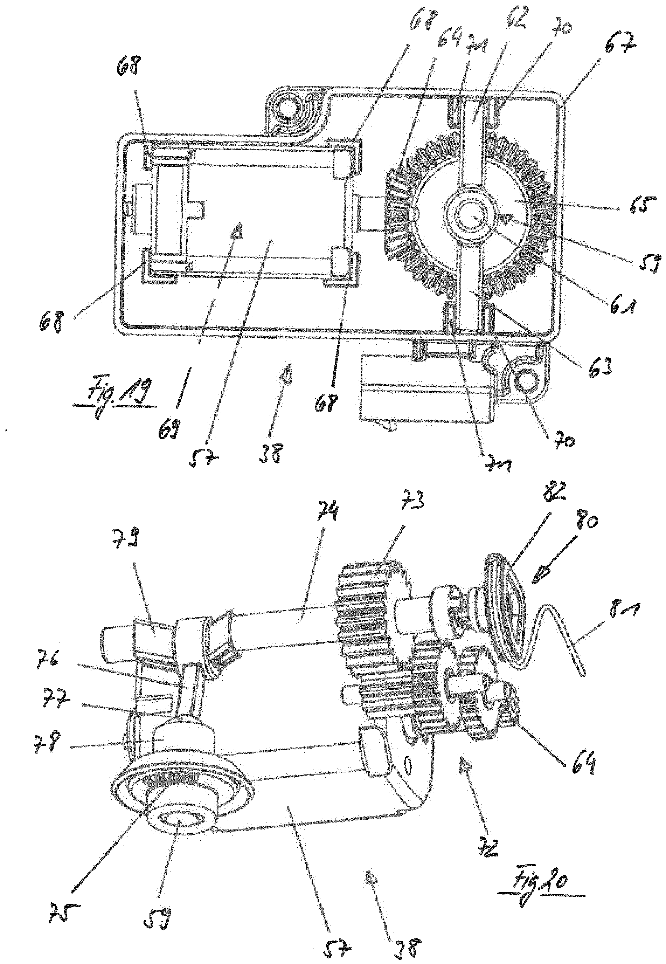

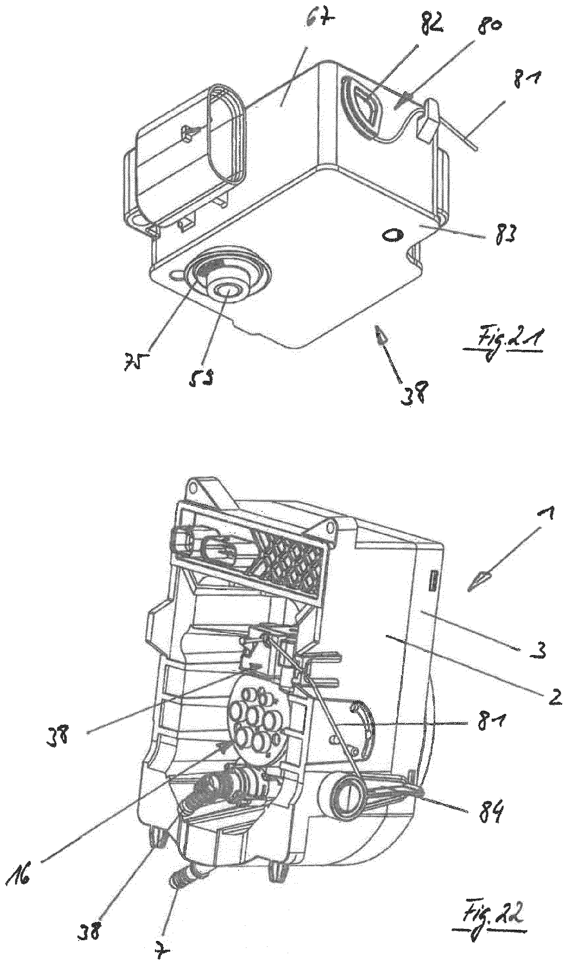

Wie schon vorstehend insbesondere anhand von Fig. 16 erläutert, verfügt die erfindungsgemäße Steckdose 1 über einen zweiten Aktuator 38, der dazu dient, ein Riegelelement zur Positionssicherung eines in die Steckdose 1 eingeführten und mit der Kontakteinrichtung 16 kontaktierten Steckers zu verfahren. Das Riegelelement kann mithin aus einer Verschlussstellung in eine Nicht-Verschlussstellung überführt werden und umgekehrt, wobei nur in der Nicht-Verschlussstellung des Riegelelements ein in die Steckdose 1 zuvor eingeführter Stecker der Steckdose bestimmungsgemäß entnommen werden kann. Um insbesondere auch bei einem Bestromungsausfall des Aktuators 38 bzw. des elektromotorischen Antriebs 57 des Aktuators 38 sicherstellen zu können, dass ein zuvor in die Verschlussstellung überführtes Riegelelement in der Verschlussstellung verbleibt, werden mit der Erfindung anhand der Fign. 17 bis 19 eine erste besondere Ausführungsform des Aktuators 38 und mit den Fign. 20 und 21 eine zweite bevorzugte Ausführungsform des Aktuators 38 vorgeschlagen.

Gemäß der ersten bevorzugten Ausführungsform des Aktuators 38 gemäß der Fign. 17 bis 19 verfügt das Riegelelement 59 über eine Hülse 60 und ein damit gekoppeltes Riegelteil 61. In Verschlussstellung wirkt das Riegelteil 61 des Riegelelements 59 mit dem positionszusichernden Stecker zusammen.

In die Hülse 60 des Riegelelements 59 greift im endmontierten Zustand ein Gewindestift 66 ein, der an einem frei drehbar gelagerten Kegelrad 65 angeordnet ist, wie sich dies insbesondere aus der Darstellung nach Fig. 18 ergibt. Das Kegelrad 65 steht seinerseits in Wirkverbindung mit einem ebenfalls als Kegelrad ausgebildeten Ritzel 64 des E-Motors 57.

Im Betriebsfall verdreht durch den E-Motor 57 angetrieben das Ritzel 64, und zwar je nach Antriebsdrehrichtung im Uhrzeigersinn oder gegen den Uhrzeigersinn. Das mit dem Ritzel 64 in Wirkverbindung stehende Kegelrad 65 verdreht in entsprechender Weise, was zu einer Verdrehbewegung auch des vom Kegelrad getragenen Gewindestifts 66 führt. Im Ergebnis dieser Verdrehbewegung ergibt sich eine translatorische Verfahrbewegung des Riegelelements 59 in Höhenrichtung entweder nach oben oder nach unten, je nach Drehrichtungssinn des Kegelrads 65 bzw. des das Kegelrad 65 antreibenden Ritzels 64. Infolge dieser translatorischen Verfahrbewegung des Riegelelements 59 in Höhenrichtung nach oben oder nach unten ergibt sich eine Überführung des Riegelelements 59 aus einer Verschlussstellung in eine Nicht-Verschlussstellung und umgekehrt. Dabei ist die Verschlussstellung des Riegelelements 59 dann erreicht, wenn es mit Bezug auf die Höhenrichtung translatorisch nach unten verfahren ist.

Um einerseits eine exakte Führung des Riegelelements 59 zu erreichen und um andererseits sicherzustellen, dass sich das Riegelelement 59 infolge einer Verdrehbewegung des Kegelrads 65 nicht in unerwünschter Weise mitverdreht, ist das Riegelelement 59 mit Führungsflügeln 62 und 63 ausgerüstet, wie dies ebenfalls im Besonderen die Fig. 17 erkennen lässt.

Im endmontierten Zustand ist die in Fig. 17 gezeigte Anordnung innerhalb eines aus einem Gehäusekasten 67 und einem Gehäusedeckel 83 gebildeten Gehäuse untergebracht. Dies zeigt insbesondere die Darstellung nach Fig. 19, wobei der besseren Übersicht wegen der Gehäusedeckel 83 in dieser Fig. nicht dargestellt ist.

Für eine positionssichere Aufnahme des Elektromotors 57 stellt der Gehäusekasten 67 Stützsockel 68 zur Verfügung, die zwischen sich einen Aufnahmeraum 69 bilden, in den der Elektromotor 57 im endmontierten Zustand eingesetzt ist.

Die Seitenwände des Gehäusekastens 67 tragen auf einander gegenüberliegenden Innenseiten Führungsstege 70 und 71, die zwischen sich einen Führungsschlitz ausbilden. In diese Führungsschlitze greifen im endmontierten Zustand die Führungsflügel 62 und 63 des Riegelelements 59, was im Betriebsfall eine sichere und ausschließlich translatorische Verfahrbewegung des Riegelelements 59 gewährleistet.

Der Vorteil der vorbeschriebenen Konstruktion besteht darin, dass es aufgrund der Gewindeverbindung von Riegelelement 59 und Gewindestift 66 sichergestellt ist, dass es selbst bei einer Stromlosstellung des Elektromotors 57 nicht ungewollt zu einer Verfahrbewegung des Riegelelements 59 kommen kann. Dieses wird vielmehr mechanisch in der zuvor mittels Unterstützung des Elektromotors 57 eingenommenen Stellung gehalten.

Eine weitere bevorzugte Ausführungsform ergibt sich aus den Darstellungen nach den Fign. 20 und 21. Gemäß dieser Ausführungsform ist das Riegelelement 59 translatorisch verfahrbar von einem Lager 75 gehalten, das im endmontierten Zustand vom Gehäusedeckel 83 des den Aktuator 38 aufnehmenden Gehäuses gehalten ist, wie dies insbesondere die Darstellung nach Fig. 21 erkennen lässt.

Zwecks translatorischer Verfahrbewegung ist der Riegel 59 endseitig an eine Pleuelstange 76 angebunden. Dabei trägt die Pleuelstange 76 riegelelementseitig einen Kugelkopf 77, der im endmontierten Zustand von einem vom Riegelelement 59 bereitgestellten Kugelkäfig 78 gefangen ist.

Die Pleuelstange 67 ist anderendseitig an eine Abtriebswelle 74 angekoppelt, wobei die Abtriebswelle 74 eine Pleuelanbindung 79 bereitstellt, die zur Verdrehachse der Abtriebswelle 74 versetzt ausgebildet ist. Infolge dieser Anbindung kommt es bei einer Verdrehbewegung der Abtriebswelle 74 zu einer Auf- und Abwärtsbewegung der Pleuelstange 76, was zu einer Auf- bzw. Abwärtsbewegung auch des Riegelelements 59 führt.

Für den Antrieb der Abtriebswelle 74 sorgt der E-Motor 57. Dieser wirkt über sein Ritzel 64 auf eine Getriebeanordnung 72 ein, die abtriebsseitig mit einem von der Abtriebswelle 74 bereitgestellten Zahnrad 73 in Wirkverbindung steht.

Im bestimmungsgemäßen Verwendungsfall sorgt die vom Elektromotor 57 angetriebene Abtriebswelle 74 dafür, dass die Pleuelstange 76 und damit auch das daran angekoppelte Riegelelement 59 je nach Verdrehrichtung der Abtriebswelle 74 in Höhenrichtung entweder nach oben oder nach unten verfahren wird. Fig. 20 lässt indes eine Mittenstellung mit schräg gestellter Pleuelstange 76 erkennen. In der Verschlussstellung des Riegelelements 59 ist die Abtriebswelle 74 soweit verdreht, dass die Pleuelanbindung 79 in Höhenrichtung nach unten weisend ausgerichtet ist, die Pleuelstange 76 und das Riegelelement 59 also auf einer gemeinsamen Linie liegen. In der Nicht-Verschlussstellung ist die Antriebswelle 74 im Vergleich zur Verschlussstellung um 180° verdreht, das heißt die Pleuelanbindung 79 ist in Höhenrichtung nach oben weisend ausgerichtet.

Sowohl in der Verschlussstellung des Riegelelements 59 als auch in der Nicht-Verschlussstellung des Riegelelements 59 befindet sich die Pleuelanbindung 79 in einer sog. "Totstellung". In dieser Stellung ist die Pleuelstange 76 jeweils in linearer Verlängerung des Riegelelements 59 ausgerichtet. Dies erbringt den Vorteil einer mechanischen Sicherung. Denn insbesondere bei einem Stromausfall kann das Riegelelement 59 nicht ungewollt aus einer der beiden Totstellungen heraus verfahren werden. Damit gewährleistet auch diese Ausführungsform selbst bei Stromausfall eine Positionssicherung eines von der Steckdose aufgenommenen Steckers.

Um insbesondere im Falle eines Stromausfalls eine Notentriegelung hinsichtlich eines von der Steckdose 1 aufgenommenen Steckers bewerkstelligen zu können, verfügt die erfindungsgemäße Steckdose 1 über einen Notentriegelungsmechanismus 80.

Der Notentriegelungsmechanismus 80 verfügt gemäß der Ausführungsform nach den Fign. 20 und 21 über einen Nocken 82, der über eine Zwischenwelle endseitig auf die Abtriebswelle 74 einwirkt. Über diesen Nocken 82 ist ein Seil 81 geführt, das zur Positionssicherung von einer vom Nocken 82 bereitgestellten Rinne aufgenommen ist.

Wie dies insbesondere die Darstellung nach Fig. 22 erkennen lässt, ist das Seil 81 des Notentriegelungsmechanismusses 80 anderendseitig bis zu einem Schwenkhebel 84 geführt, der verwenderseitig zu ergreifen ist. Im Falle einer Notentriegelung sorgt mithin eine verwenderseitig eingeleitete Verschwenkbewegung des Schwenkhebels 64 dafür, dass an dem Seil 81 in Seilrichtung mit der Folge gezogen wird, dass es zu einer Verschwenkbewegung des Nockens 82 und damit auch der damit gekoppelten Abtriebswelle 74 kommt. Im Ergebnis verfährt in schon vorbeschriebener Weise das Riegelelement 59 aus einer Verschlussstellung in eine Nicht-Verschlussstellung, allerdings nicht angetrieben durch den Elektromotor 57, sondern manuell mittels des Notentriegelungsmechanismusses 80.

Die anhand der Fign. 17 bis 19 beschriebene Ausführungsform verfügt gleichfalls über einen Notentriegelungsmechanismus 80, der der besseren Übersicht wegen in den Fign. aber nicht dargestellt ist. Gemäß dieser Ausführungsform ist ein Notentriegelungsmechanismus 80 vorgesehen, der über ein Spannelement in Form beispielsweise einer Feder verfügt. Diese wird im bestimmungsgemäßen Handhabungsfall der Überführung des Riegelelements 59 in die Verschlussstellung gespannt, so dass das Riegelelement 59 in Verschlussstellung unter Federvorspannung steht. Im Entriegelungsfall wird gleichfalls bevorzugterweise durch einen Seilzug eine Entspannung des vorgespannten Spannelements erreicht, das dann durch die Kraftfreisetzung eine Überführung des Riegelelements 59 aus der Verschlussstellung in die Nicht-Verschlussstellung bewirkt. Als Spannelement kann beispielsweise eine Torsionsfeder zum Einsatz kommen, die im Falle der Betätigung des Notfallmechanismusses dafür Sorge trägt, dass das Riegelelement 59 relativ gegenüber dem Gewindestift 66 so verdreht, dass das Riegelelement 59 in Höhenrichtung nach oben, das heißt in seine Nicht-Verschlussstellung verfahren wird. Die Erfindung wird durch die Ansprüche definiert.

**Bezugszeichenliste**

| | | | |
|---|---|---|---|
| 1 | Steckdose | 34 | Gehäusegrundkörper |
| 2 | Dosengehäuse | 35 | Wasserablauf |
| 3 | Dosendeckel | 36 | Dichtring |
| 4 | Steckeröffnung | 37 | Gehäusedeckel |
| 5 | Deckel | 38 | zweiter Aktuator |
| 6 | Lichtwellenleiter | 39 | Anschlusskabel |
| 7 | Wasserabflussstutzen | 40 | Lagerring |
| 8 | Rasthaken | 41 | Trägerplatte |
| 9 | Öffnung | 42 | Steuereinheit |
| 10 | Stützring | 43 | Anschlussstift |
| 11 | Dichtung | 44 | Schlitz |
| 12 | Nut | 45 | Anschlussstecker |
| 13 | erster Aktuator | 46 | Deckel |
| 14 | elektrischer Antrieb | 47 | Kontaktbuchse |
| 15 | Schwenkhebel | 48 | Schraube |
| 16 | Kontakteinrichtung | 49 | Öffnung |
| 17 | Schraube | 50 | Bohrung |
| 18 | Flanschplatte | 51 | Rastzunge |
| 19 | Gewindebohrung | 52 | Führungshülse (Aufnahme) |
| 20 | Durchgangsbohrung | 53 | Hülse |
| 21 | Tragabschnitt | 54 | Wandabschnitt |
| 22 | Dichtung | 55 | Rastabschnitt |
| 23 | Öffnung | 56 | Rastabschnitt |
| 24 | Ringstutzen | 57 | E-Motor |
| 25 | Verschlussplatte | 58 | Randkante |
| 26 | Deckelarm | 59 | Riegelelement |
| 27 | Schwenkhebel | 60 | Hülse |
| 28 | Antriebshebel | 61 | Riegelteil |
| 29 | Hebelarm | 62 | Führungsflügel |
| 30 | Fortsatz | 63 | Führungsflügel |
| 31 | Langloch | 64 | Ritzel |
| 32 | Führungskontur | 65 | Kegelrad |
| 33 | Gehäuse | 66 | Gewindestift |
| 67 | Gehäusekasten | 76 | Pleuelstange |
| 68 | Stützsockel | 77 | Kugelkopf |
| 69 | Aufnahmeraum | 78 | Kugelkäfig |
| 70 | Führungssteg | 79 | Pleuelanbindung |
| 71 | Führungssteg | 80 | Notentriegelung |
| 72 | Getriebeanordnung | 81 | Seil |
| 73 | Zahnrad | 82 | Nocken |
| 74 | Antriebswelle | 83 | Gehäusedeckel |
| 75 | Lager | 84 | Schwenkhebel |

## Patentansprüche

1. Steckdose zur Stromaufnahme mittels eines Steckers, mit einem Dosengehäuse (2) und einer davon aufgenommenen Kontakteinrichtung (16), die eine Mehrzahl von im endmontierten Zustand jeweils mit einer Kontaktbuchse (47) bestückten Aufnahmen (52) aufweist, wobei das Dosengehäuse (2) eine mittels eines verschwenkbar ausgebildeten Deckels (5) verschließbare Steckeröffnung (4) für einen Zugriff auf die Kontakteinrichtung (16) aufweist, und mit einem vom Dosengehäuse (2) beherbergten und über einen elektromotorischen Antrieb (57) verfügenden Aktuator (38), der im Stromentnahmefall einer elektromotorischen Verfahrbewegung eines Riegelelements (59) zur Positionssicherung eines die Kontakteinrichtung (16) kontaktierenden Steckers dient, wobei eine mit dem Aktuator (38) zusammenwirkende Steuereinheit (42) vorgesehen ist, die eine Beendigung einer Stromentnahme detektiert, wobei das vom Aktuator (38) betätigbare Riegelelement (59) nur dann in eine Offenstellung überführbar ist, wenn die Steckdose stromlos gestellt ist,
**dadurch gekennzeichnet, dass**
die Steckdose über Kommunikationsanschlüsse und einen Energiespeicher verfügt, wobei der Energiespeicher ausgelegt ist, um im Störfall eine Mitteilung an eine übergeordnete Zentrale zu bewirken, wobei nach vorheriger Überprüfung durch die übergeordnete Zentrale eine Bestromung der Steckdose freigeschaltet wird, so dass es einem Verwender gestattet ist, eine Steckerentriegelung vorzunehmen, wobei es einem Verwender angezeigt wird, wenn eine Bestromung der Steckdose aus Sicherheitsgründen nicht erfolgt.

2. Steckdose nach Anspruch 1, **gekennzeichnet durch** einen vom Dosengehäuse (2) beherbergten und über einen elektromotorischen Antrieb (14) verfügenden Aktuator (13), der im Betriebsfall einer elektromotorischen Verschwenkbewegung des Deckels (5) dient.

3. Steckdose nach Anspruch 2, **dadurch gekennzeichnet, dass** der Aktuator (13) mit der Steuereinheit (42) zusammenwirkt, die mittels eines Näherungssensors eine und/oder einen sich dem Dosengehäuse (2) nähernde Person und/oder nähernden Gegenstand detektiert und bei Unterschreitung eines vorgebbaren Näherungsabstandes ein Steuersignal an den Aktuator (13) zum Verschwenken des Deckels (5) in eine Offenstellung abgibt.

4. Steckdose nach einem der vorhergehenden Ansprüche, **dadurch gekennzeichnet, dass** die Steuereinheit (42) mit einem Steckersensor einen bestimmungsgemäß mit der Kontakteinrichtung (16) gekoppelten Stecker detektiert und ein entsprechendes Freigabesignal zur Bestromung der Kontakteinheit (16) abgibt.

5. Steckdose nach einem der vorhergehenden Ansprüche, **dadurch gekennzeichnet, dass** die Steuereinheit (42) im Stromentnahmefall ein Steuersignal an den Aktuator (38) zwecks Betätigung des Riegelelements (59) abgibt.

6. Steckdose nach einem der vorhergehenden Ansprüche, **gekennzeichnet durch** eine die Steckeröffnung (4) ringförmig umgebende Beleuchtungseinrichtung.

7. Steckdose nach Anspruch 6, **dadurch gekennzeichnet, dass** die Beleuchtungseinrichtung eine Lichtwellenleiter (6) aufweist.

8. Steckdose nach einem der vorhergehenden Ansprüche, **dadurch gekennzeichnet, dass** die Kontakteinrichtung (16) ein einseitig offenes und die Kontaktbuchsen (47) aufnehmendes Gehäuse (33) sowie einen Gehäusedeckel (37) aufweist, wobei der Gehäusedeckel (37) Öffnungen (49) für die Kontaktbuchsen (37) tragenden Anschlusskabel (39) aufweist.

9. Steckdose nach einem der vorhergehenden Ansprüche, **gekennzeichnet durch** einen Notentriegelungsmechanismus (80), der im Falle eines Stromausfalls einer Notentriegelung hinsichtlich eines von der Steckdose aufgenommenen Steckers dient.

10. Steckdose nach Anspruch 9, **dadurch gekennzeichnet, dass** der Notentriegelungsmechanismus (80) über einen Nocken (82) verfügt, der über eine Zwischenwelle endseitig auf eine Antriebswelle (4) einwirkt.

11. Steckdose nach Anspruch 10, **dadurch gekennzeichnet, dass** über den Nocken (82) ein Seil (81) geführt ist, das zur Positionssicherung von einer vom Nocken (82) bereitgestellten Rinne aufgenommen ist.

12. Steckdose nach Anspruch 11, **dadurch gekennzeichnet, dass** das Seil (81) anderendseitig bis zu einem Schwenkhebel (84) geführt ist.

13. Steckdose nach Anspruch 9, **dadurch gekennzeichnet, dass** der Notentriegelungsmechanismus (80) über ein Spannelement in Form einer Feder verfügt, die im bestimmungsgemäßen Handhabungsfall der Überführung des Riegelelements (59) in die Verschlussstellung gespannt wird, so dass das Riegelelement (59) in Verschlussstellung unter Federvorspannung steht.

14. Steckdose nach einem der vorhergehenden Ansprüche 1 bis 8, **dadurch gekennzeichnet, dass** das Riegelelement (59) endseitig an eine Pleuelstange (76) angebunden ist, wobei die Pleuelstange (76) anderendseitig an eine Antriebswelle (74) angekoppelt ist, wobei die Antriebswelle (74) eine Pleuelanbindung (79) bereitstellt, die zur Verdrehachse der Antriebswelle (74) versetzt ausgebildet ist.

15. Steckdose nach Anspruch 14, **dadurch gekennzeichnet, dass** sich die Pleuelanbindung (79) sowohl in einer Verschlussstellung des Riegelelements (59) als auch in einer Nicht-Verschlussstellung des Riegelelements (59) in einer Totstellung befindet, in der die Pleuelstange (76) jeweils in linearer Verlängerung des Riegelelements (59) ausgerichtet ist.

## Claims

1. A socket for power consumption by means of a connector, comprising a receptacle shell (2) and a contact device (16) received by this one, which contact device (16) comprises a plurality of receptions (52) respectively equipped with one contact jack (47) in the finally assembled state, wherein the receptacle shell (2) comprises a connector opening (4) that can be closed by means of a lid (5) configured in a pivoting manner and that is provided for allowing a connector to have access to the contact device (16), and comprising an actuator (38) which is accommodated by the receptacle shell (2) and that has an electromotive drive (57), which actuator (38) serves, in the case of current drain, for an electromotive displacement of a locking element (59) for securing the position of a connector contacting the contact device (16), wherein a control unit (42) that cooperates with the actuator (38) is provided, which control unit (42) detects a termination of a current drain, wherein the locking element (59) that can be actuated by the actuator (38) can only be transferred into an open position, if the socket is set to be out of service,
**characterized in that**
the socket comprises communication connections and an energy storage, wherein the energy storage is configured to provoke a message to a superordinate centre in the event of a malfunction, wherein after a previous verification by means of the superordinate centre the current supply to the socket will be activated, such that a user is allowed to unlock the connector, wherein it is indicated to a user if no current is fed to the socket for security reasons.

2. A socket according to claim 1, **characterized by** an actuator (13) accommodated by the receptacle shell (2) and having an electromotive drive (14), which actuator (13) serves, during operation, for an electromotive pivoting motion of the lid (5).

3. A socket according to claim 2, **characterized in that** the actuator (13) cooperates with the control unit (42), which detects a person and/or an object who/which approaches the receptacle shell (2) by means of a proximity sensor and if the detection is below a pre-determinable proximity distance, it emits a control signal and sends it to the actuator (13) for pivoting the lid (5) into an open position.

4. A socket according to one of the preceding claims, **characterized in that** the control unit (42) detects a connector that is appropriately coupled to the contact device (16) by means of a connector sensor and emits a corresponding release signal for feeding current to the contact unit (16).

5. A socket according to one of the preceding claims, **characterized in that** in case of current drain, the control unit (42) emits a control signal to the actuator (38) for the purpose of actuating the locking element (59).

6. A socket according to one of the preceding claims, **characterized by** an illumination device that surrounds the connector opening (4) in an annular manner.

7. A socket according to claim 6, **characterized in that** the illumination device comprises an optical fibre (6).

8. A socket according to one of the preceding claims, **characterized in that** the contact device (16) comprises a housing (33) that is open on one side and receives the contact jacks (47) as well as a housing lid (37), wherein the housing lid (37) comprises openings (49) for the connection cables (39) which carry the contact jacks (47).

9. A socket according to one of the preceding claims, **characterized by** an emergency unlocking mechanism (80), which in case of a power cut, serves for an emergency unlocking with respect to a connector received by the socket.

10. A socket according to claim 9, **characterized in that** the emergency unlocking mechanism (80) comprises a cam (82) which acts via an intermediate shaft on the end side of a driving shaft (4).

11. A socket according to claim 10, **characterized in that** a rope (81) is guided over the cam (82), which rope (81) is received by a channel provided by the cam (82) for securing the position.

12. A socket according to claim 11, **characterized in that** on the side of the other end, the rope (81) is guided until a swivelling lever (84).

13. A socket according to claim 9, **characterized in that** the emergency unlocking mechanism (80) comprises a clamping element in form of a spring which, in the appropriate handling case of transferring the locking element (59) into the locking position, is tensioned, such that the locking element (59) is under spring preload in the locking position.

14. A socket according to one of the preceding claims 1 through 8, **characterized in that** the locking element (59) is attached on the end side to a piston rod (76), wherein the piston rod (76) is coupled on the other end to a drive shaft (74), wherein the drive shaft (74) provides a piston rod connection (79), which is offset with respect to the rotation axis of the drive shaft (74).

15. A socket according to claim 14, **characterized in that** the piston rod connection (79) is in a dead position both in a locking position of the locking element (59) and in a non-locking position of the locking element (59), in which dead position the piston rod (76) is respectively aligned in a linear extension of the locking element (59).

## Revendications

1. Prise de courant pour la consommation de courant par moyen d'une fiche, comprenant un boîtier de prise (2) et un dispositif de contact (16) reçu par celui-ci, lequel dispositif de contact (16) comprend une pluralité d'espaces de réception (52) munis chacun d'une douille de contact (47) à l'état de montage final, le boîtier de prise (2) comprenant une ouverture de fiche (4), qui peut être fermée par moyen d'un couvercle (5) conçu de manière pivotant, et qui permet à la fiche d'accéder au dispositif de contact (16), comprenant un actionneur (38) accommodé par le boîtier de prise (2) et comprenant un entraînement électromoteur (57), qui dans le cas d'une consommation de courant sert pour un un déplacement électromoteur d'un élément de verrouillage (59) pour assurer la position d'une fiche, qui est en contact avec le dispositif de contact (16), une unité de commande (42) étant prévue, qui coopère avec l'actionneur (38), et qui détecte une fin de la consommation de courant, dans lequel l'élément de verrouillage (59) pouvant être actionné par l'actionneur (38) ne peut être transféré dans une position d'ouverture que si la prise est mise hors tension,
**caractérisée en ce que**
la prise de courant comprend des ports de communication et un réservoir d'énergie, le réservoir d'énergie étant configuré pour provoquer un message à une centrale supérieure en cas de perturbation, dans lequel après une vérification préalable par moyen de la centrale supérieure l'alimentation en courant de la prise de courant sera activée, de sorte qu'il est permis à un utilisateur de déverrouiller la fiche, dans lequel il est indiqué pour un utilisateur si la prise de courant n'est pas alimentée en courant pour des raisons de sécurité.

2. Prise de courant selon la revendication 1, **caractérisée par** un actionneur (13) accommodé par le boîtier de prise (2) et comprenant un premier entraînement électromoteur (14), lequel actionneur (13) sert en cas de fonctionnement pour un mouvement de pivotement électromoteur du couvercle (5).

3. Prise de courant selon la revendication 2, **caractérisée en ce que** l'actionneur (13) coopère avec l'unité de commande (42), qui détecte une personne et/ou un objet, qui s'approche du boîtier de prise (2), à l'aide d'un capteur de proximité et qui émet un signal de commande, si la distance est inférieure à une distance de proximité pré-déterminable, et envoie le signal de commande à l'actionneur (13) pour pivoter le couvercle (5) dans une position d'ouverture.

4. Prise de courant selon l'une des revendications précédentes, **caractérisée en ce que** l'unité de commande (42) détecte une fiche couplée de manière appropriée au dispositif de contact (16) par moyen d'un capteur de fiche et émet un signal de déblocage correspondant pour l'alimentation de l'unité de contact (16) en courant.

5. Prise de courant selon l'une des revendications précédentes, **caractérisée en ce que** dans le cas d'une consommation de courant l'unité de commande (42) envoie un signal de commande à l'actionneur (38) pour actionner l'élément de verrouillage (59).

6. Prise de courant selon l'une des revendications précédentes, **caractérisée par** un dispositif d'illumination, qui entoure l'ouverture de fiche (4) en forme d'une bague.

7. Prise de courant selon la revendication 6, **caractérisée en ce que** le dispositif d'illumination comprend une fibre optique (6).

8. Prise de courant selon l'une des revendications précédentes, **caractérisée en ce que** dispositif de contact (16) comprend un boîtier (33), qui est ouvert d'un côté et qui reçoit les douilles de contact (47), ainsi qu'un couvercle de boîtier (37), le couvercle de boîtier (37) comprenant des ouvertures (49) destinées aux câbles de raccordement (39), qui portent des douilles de contact (47).

9. Prise de courant selon l'une des revendications précédentes, **caractérisée par** un mécanisme de déverrouillage d'urgence (80), qui, dans le cas d'une coupure de courant, sert pour un déverrouillage d'urgence par rapport à une fiche reçue par la prise de courant.

10. Prise de courant selon la revendication 9, **caractérisée en ce que** le mécanisme de déverrouillage d'urgence (80) comprend une came (82), qui agit via un arbre intermédiaire sur le côté d'extrémité d'un arbre d'entraînement (4).

11. Prise de courant selon la revendication 10, **caractérisée en ce qu'**une corde (81) est guidée sur la came (82), laquelle corde (81) est reçue par une rainure fournie par la came (82) pour le maintien en position.

12. Prise de courant selon la revendication 11 **caractérisée en ce que** sur le côté de l'autre extrémité la corde (81) est guidée jusqu'à un levier pivotant (84).

13. Prise de courant selon la revendication 9, **caractérisée en ce que** le mécanisme de déverrouillage d'urgence (80) comprend un élément de serrage en forme d'un ressort, qui est mis sous tension dans le cas de maniement approprié du transfert de l'élément de verrouillage (59) à la position de fermeture, de sorte que l'élément de verrouillage (59) se trouve sous précontrainte de ressort dans la position de fermeture.

14. Prise de courant selon l'une des revendications précédentes 1 à 8, **caractérisée en ce que** sur le côté d'extrémité l'élément de verrouillage (59) est fixé à une bielle (76), la bielle (76) étant couplée à un arbre d'entraînement (74) sur le côté de l'autre extrémité, l'arbre d'entraînement (74) fournissant une liaison de bielle (79), qui est décalée par rapport à l'axe de rotation de l'arbre d'entraînement (74).

15. Prise de courant selon la revendication 14, **caractérisée en ce que** la liaison de bielle (79) se trouve dans une position morte dans une position de fermeture de l'élément de verrouillage (59) et dans une position de non-fermeture de l'élément de verrouillage (59), la bielle (76) étant respectivement alignée dans une prolongation linéaire de l'élément de verrouillage (59) dans la position morte.
